# EUROPEAN PATENT APPLICATION

(11) **EP 4 560 740 A1**
(43) Date of publication of application: **28.05.2025**
(21) Application number: 24214333.7
(22) Date of filing: 20.11.2024
(51) Int. Cl.: H01M 8/0258

(54) **FUEL CELL SEPARATOR**

(30) Priority: 24.11.2023 KR 20230166126; 29.11.2023 WO PCT/KR2023/019496
(71) Applicant: Terralix Co.,Ltd., Buan-gun, Jeollabuk-do 56332 (KR)
(72) Inventor: KIM, Dae Sung, 56316 Buan-gun (KR); BAEK, Sang Cheol, 54865 Jeonju-si (KR); KIM, Du Hee, 18614 Hwaseong-si (KR)
(74) Representative: Marks & Clerk LLP

(57) **Abstract**

The present invention relates to a fuel cell separator. More particularly, the fuel cell separator of the present invention may include a body including a gas inlet formed along a first side and a gas outlet formed along a second side facing the first side and located in the diagonal direction of the gas inlet; a first block installed in the body in a diagonal direction and configured to fluidly connect the gas inlet and the gas outlet; a second block installed adjacent to the first corner area of the first side and located on the opposite side of the gas inlet so as to be fluidly connected to the first block; and a third block installed adjacent to the second corner area of the second side and located on the opposite side of the gas outlet so as to be fluidly connected to the first block.

## Description

### [Technical Field]

The present invention relates to a fuel cell separator, and more particularly, to a fuel cell separator including a body including a gas inlet and a gas outlet, a first block installed in the body, a second block fluidly connected to the first block, and a third block fluidly connected the first block; and preventing the flooding phenomenon and the drying phenomenon of membrane-electrode assembly and controlling the fluidity of a flow field according to the structure and area ratio of the first, second, and third blocks.

### [Background Art]

Fuel cells, which are classified into solid oxide fuel cells, molten carbonate fuel cells, and polymer electrolyte membrane fuel cells depending on the type of electrolyte, are power generation devices that convert chemical energy generated by oxidizing fuel into electrical energy.

Among these fuel cells, a polymer electrolyte membrane fuel cell (PEMFC) includes a membrane-electrode assembly (MEA) including an electrode layer with an anode and a cathode centered on an electrolyte membrane that is permeable to hydrogen ions; a gas diffusion layer (GDL) that evenly distributes reaction gases; and a separator (bipolar plate) that supplies reaction gases to the gas diffusion layer and discharges generated water.

Examples of flow path structures of conventionally known fuel cell separators for diffusion of reaction gas and discharge of water include 2D flow path structures, such as a meandering flow path in which a series of winding flow paths are formed, a parallel flow path in which a plurality of linear flow path groups are arranged in parallel, a parallel and serial hybrid flow path in which parallel flow paths are interconnected, and a protrusion-shaped flow path in which a plurality of dot-shaped protrusions are arranged, and 3D flow path structures made up of mesh-shaped structures.

However, in a fuel cell separator in which a meandering flow path, a parallel flow path, and a parallel and series hybrid flow path are formed, since gas flows laminarly in the flow paths, moisture generated in a membrane-electrode assembly (MEA) is not properly removed by the fuel cell separator. In addition, as gas pressure decreases toward a gas outlet, the membrane-electrode assembly (MEA) flooding phenomenon, which occurs when the flow path is blocked by moisture, is likely to occur.

In addition, in a fuel cell separator with a protruding flow path structure or a flow path structure to which a combination of a protruding flow path structure and another flow path structure is applied, there is a problem in which moisture generated in a membrane-electrode assembly (MEA) is excessively discharged, causing the membrane-electrode assembly (MEA) to dry out.

In addition, in a fuel cell separator with a three-dimensional structure flow path, there are problems in that moisture is not removed from the three-dimensional flow path of the complex structure, processing and assembly are difficult, and production costs increase.

In addition, conventional fuel cell systems must be equipped with a fuel cell stack humidifier to prevent the membrane-electrode assembly (MEA) from drying out. Accordingly, the volume and weight of the fuel cell system increase, and the devices or fields in which the fuel cell system can be utilized are limited due to the increase in the volume and weight of the fuel cell system.

### [Related Art Documents]

### [Patent Documents]

| | |
|---|---|
| (Patent Document 1): | KR 2017-0050689 (publication date : May 11, 2017) |
| (Patent Document 2): | KR 2010-0112354 (publication date : October 19, 2010) |

### [Disclosure]

### [Technical Problem]

Therefore, the present invention has been made in view of the above problems, and it is one object of the present invention to provide a fuel cell separator having a flow path structure capable of preventing the flooding phenomenon and the drying phenomenon of membrane-electrode assembly (MEA).

It is another object of the present invention to provide a fuel cell separator having a flow path structure capable of forming a three-dimensional H₂O circulation path in which moisture generated in a membrane-electrode assembly (MEA) in a fuel cell is reused for self-humidification of the membrane-electrode assembly (MEA).

It is yet another object of the present invention to provide a fuel cell separator having a flow path structure capable of reducing the overall volume and weight of a fuel cell system by removing a humidifier from the fuel cell system.

The problems to be solved by the present invention are not limited to the problems mentioned above, and other problems not mentioned will be clearly understood by those skilled in the art from the description below.

### [Technical Solution]

In accordance with one aspect of the present invention, provided is a fuel cell separator including a body including a gas inlet formed along a first side and a gas outlet formed along a second side located diagonally from the gas inlet and facing the first side; the first block installed in the diagonal direction to fluidly connect the gas inlet and the gas outlet; a second block installed adjacent to a first corner area of the first side, located opposite the gas inlet, so as to be fluidly connected to the first block; and a third block installed adjacent to a second corner area of the second side, located opposite the gas outlet, so as to be fluidly connected to the first block.

In addition, the first block may include a plurality of first block lines arranged to form a first angle with a first center line that passes through a center point of the body so as to be perpendicular to the first side of the body and arranged at an 11th gap and a plurality of first flow paths formed between the first block lines.

In addition, each of the first block lines may include a plurality of first block members arranged at an 12th gap and a plurality of first mixing zones formed by the 12th gap and fluidly connecting the first flow paths.

In addition, the first block lines may include a first boundary block line facing an end of the gas inlet and forming a boundary with the second block and a second boundary block line facing an end of the gas outlet and forming a boundary with the third block.

In addition, an area ratio of the first, second, and third blocks to a total area of the body may vary depending on changes in one or more of a length of the gas inlet, and a length of the gas outlet, and the first angle.

In addition, the second block may include a plurality of second block lines forming a fourth angle with a first center line that passes through a center point of the body so as to be perpendicular to a first side of the body and arranged at a second gap and a plurality of second flow paths formed between the second block lines.

In addition, each of the second block lines may include a plurality of second block members arranged at a 21th gap and a plurality of second mixing zones formed by the 21th gap and fluidly connecting the second flow paths.

In addition, the third block may include a plurality of third block lines forming a fifth angle with a first center line that passes through a center point of the body so as to be perpendicular to a first side of the body and arranged at a third gap and a plurality of third flow paths formed between the third block lines.

In addition, each of the third block lines may include a plurality of third block members arranged at a 31th gap and a plurality of third mixing zones formed by the 31th gap and fluidly connecting the third flow paths.

In addition, the fuel cell separator may further include a pair of fluid paths installed parallel to the first center line that passes through a center point of the body so as to be perpendicular to the first side of the body and installed spaced apart from each other with the first block, the second block, and the third block therebetween.

In addition, the pair of fluid paths may include a first fluid path installed to face one end of the gas inlet and installed between the first side and the second side so as to be fluidly connected to the first block and the third block, and a second fluid path installed to face one end of the gas outlet and installed between the first side and the second side so as to be fluidly connected to the first block and the second block.

### [Advantageous effects]

According to a fuel cell separator according to one embodiment of the present invention, by a diagonal flow field formed by fluidly connecting a plurality of first flow paths with laminar flow and adjacent to each other by a plurality of first mixing zones where turbulence occurs, since gas diffusivity toward a membrane-electrode assembly (MEA) is improved and moisture is discharged smoothly, the H₂O flooding phenomenon in the membrane-electrode assembly (MEA) and the first flow paths can be prevented.

In addition, according to the fuel cell separator according to one embodiment of the present invention, by a three-dimensional H₂O circulation path formed by the first linear diagonal flow field and the first curved diagonal flow field formed in the first block of the fuel cell separator, and first to third turbulent stagnant flow fields formed in second and third blocks, H₂O generated in a membrane-electrode assembly can be smoothly discharged outside the fuel cell, thereby preventing the H₂O flooding phenomenon. In addition, some of the H₂O discharged from the membrane-electrode assembly can be supplied to the membrane-electrode assembly through the three-dimensional H₂O circulation path, thereby preventing the membrane-electrode assembly from drying out.

In addition, according to the fuel cell separator according to one embodiment of the present invention, by adjusting the area ratio (%) of each area of the first, second, and third blocks in the total block area of the first, second, and third blocks of the fuel cell separator, the gas movement rate per unit time and the energy supply per unit time can be increased to suit mobility devices. Alternatively, the gas supply area and gas diffusion area can be increased to produce high energy per unit area to suit storage devices.

### [Description of Drawings]

FIG. 1 is a schematic drawing of a fuel cell separator according to the first embodiment of the present invention.
FIG. 2 is a schematic drawing of the first block of FIG. 1.
FIG. 3 is a schematic drawing of the first block line of the first block of FIG. 2.
FIG. 4 is a schematic drawing of a first variant example of the first block line of the first block of FIG. 3.
FIG. 5 is a schematic drawing of a second variant example of the first block line of the first block of FIG. 3.
FIG. 6 is a schematic drawing of a third variant example of the first block line of the first block of FIG. 3.
FIG. 7 is a schematic drawing of the first and second boundary block lines of the fuel cell separator of FIG. 2.
FIG. 8 is a schematic drawing of the first boundary block line of FIG. 7.
FIG. 9 is a schematic drawing of a first variant example of the first boundary block line of FIG. 8.
FIG. 10 is a schematic drawing of a second variant example of the first boundary block line of FIG. 8.
FIG. 11 is a schematic drawing of a third variant example of the first boundary block line of FIG. 8.
FIG. 12 is a drawing schematically illustrating the change in the angle formed by the first center line CL and the first and second boundary block lines according to the lengths of the first and second boundary block lines and the gas inlet and gas outlet of FIG. 2.
FIGS. 13 to 16 are schematic drawings showing the change in the area of first, second, and third blocks according to the change in the angle formed by the first center line CL and the first and second boundary block lines of FIG. 12.
FIG. 17 is a schematic drawing of the second and third blocks of FIG. 1.
FIG. 18 is a schematic drawing of the second block line of the second block of FIG. 17.
FIG. 19 is a schematic drawing of a first variant example of the second block line of the second block of FIG. 18.
FIG. 20 is a schematic drawing of a second variant example of the second block line of the second block of FIG. 18.
FIG. 21 is a schematic drawing of a third variant example of the second block line of the second block of FIG. 18.
FIG. 22 is a schematic drawing illustrating a plurality of another variant examples of the second block line of the second block of FIG. 18.
FIG. 23 is a schematic diagram illustrating fluid flow in the first and second blocks of the fuel cell separator of FIG. 1.
FIG. 24 is a schematic diagram illustrating a complex flow field formed in the fuel cell separator of FIG. 1 by the fluid flow of FIG. 23.
FIG. 25 is a schematic diagram illustrating the flow paths of fluid and H₂O in a fuel cell including the fuel cell separator of FIG. 1.
FIG. 26 is a schematic diagram illustrating the flow paths of fluid and H₂O in the fuel cell separator of FIG. 1 in the fuel cell of FIG. 25.
FIG. 27 is a schematic diagram illustrating the flow paths of fluid and H₂O in the fuel cell separator into which hydrogen is introduced in the fuel cell of FIG. 25.
FIG. 28 is a schematic drawing of a fuel cell separator according to the second embodiment of the present invention.
FIG. 29 is a schematic drawing of a pair of fluid paths in the fuel cell separator of FIG. 28.
FIG. 30 is a schematic diagram illustrating a complex flow field formed in a fuel cell separator including a pair of fluid paths of FIG. 28.
FIG. 31 is a schematic diagram illustrating the flow paths of fluid and H₂O in the fuel cell separator of FIG. 28 in the fuel cell of FIG. 25.
FIG. 32 is a graph image comparing the voltage behavior over time of a novel fuel cell having a fuel cell separator applied according to the second embodiment of the present invention and a conventional fuel cell having a conventional fuel cell separator.
FIG. 33 is an enlarged graph image of the S1 portion of FIG. 32.

### [Best Mode]

The advantages and features of the present invention, and the method for achieving the advantages and features, will become clear with reference to the embodiments described below in detail together with the accompanying drawings. However, the present invention is not limited to the embodiments disclosed below, but may be implemented in various different forms.

Hereinafter, the technical features of the present invention will be described in detail with reference to the attached drawings.

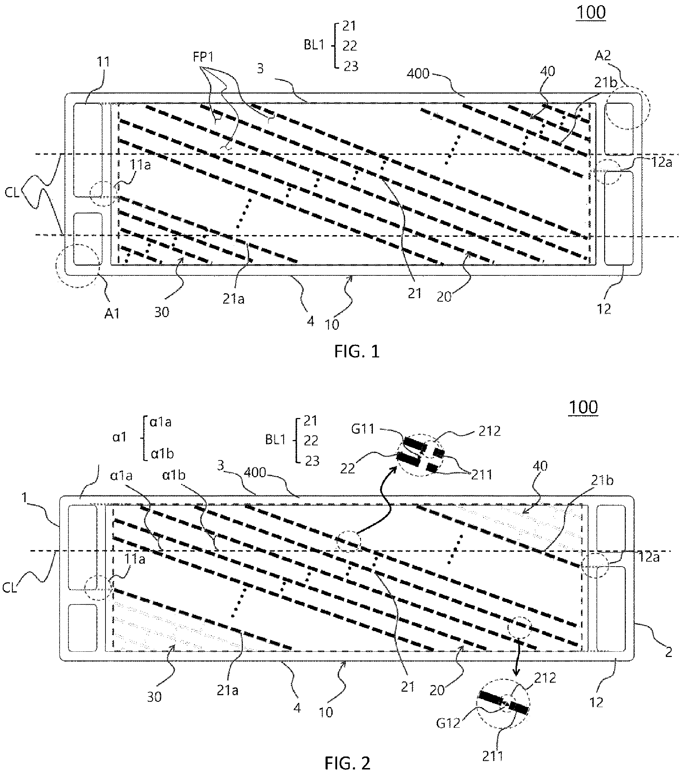

FIG. 1 is a schematic drawing of a fuel cell separator according to the first embodiment of the present invention.

Referring to FIG. 1, a fuel cell separator 100 according to the first embodiment of the present invention may include a body 10, a first block 20, a second block 30, and a third block 40.

The body 10 of the fuel cell separator 100 according to an embodiment may have a rectangular structure having a first side 1, a second side 2 facing the first side 1, and a third side 3 and a fourth side 4 formed to face each other and formed to connect the first side 1 and the second side 2.

However, the body 10 according to an embodiment is not limited to a rectangle, but may be one of polygons having opposite short or long sides.

The body 10 of the fuel cell separator 100 may include a gas inlet 11 and a gas outlet 12, and a sealing member 400 may be coupled to the body 10.

Here, the gas inlet 11 may be formed along the first side 1 of the body 10, and the gas outlet 12 may be formed so as to be located in the diagonal direction of the gas inlet 11 along the second side 2 of the body 10.

In addition, the sealing member 400 may be joined along the edge of the body 10 to surround the first block 20, the second block 30, and the third block 40.

Accordingly, according to the sealing member 400 according to an embodiment, gas flowing into the first inlet 11 of the body 10 may be prevented from leaking out. Gas moving in the diagonal direction between the inlet 11 and the first outlet 12 may be prevented from moving outside the first block 20, the second block 30, and the third block 40, thereby allowing a flow field to be formed by gas flowing into the first block 20, the second block 30, and the third block 40.

However, the configuration for preventing gas movement to the outside of the first block 20, the second block 30, and the third block 40 is not limited to the sealing member 400, and may include various configurations, such as gas blocking projections and gas blocking members, installed around the first block 20, the second block 30, and the third block 40 to prevent the movement of gas.

The first block 20 according to an embodiment may be installed in a diagonal direction between the gas inlet 11 and the gas outlet 12 in the body 10 so as to fluidly connect the gas inlet 11 and the gas outlet 12.

In addition, the second block 30 according to an embodiment may be positioned opposite the gas inlet 11 so as to be fluidly connected to the first block 20 and may be installed adjacent to a first corner area A1 of the first side.

In addition, the third block 40 according to an embodiment may be positioned opposite the gas outlet 12 so as to be fluidly connected to the first block 20 and may be installed adjacent to a second corner area A2 of the second side.

Here, according to this embodiment, the second block 30 and the third block 40 may be installed diagonally between the first side 1 and the second side 2.

Accordingly, according to the fuel cell separator 100 according to an embodiment, a complex flow field may be formed, including a diagonal flow field formed in the first block 20 installed diagonally between the gas inlet 11 and the gas outlet 12 and a stagnant flow field that is formed in the second block 30 and the third block 40 and is fluidly connected to a diagonal flow field formed in the first block 20.

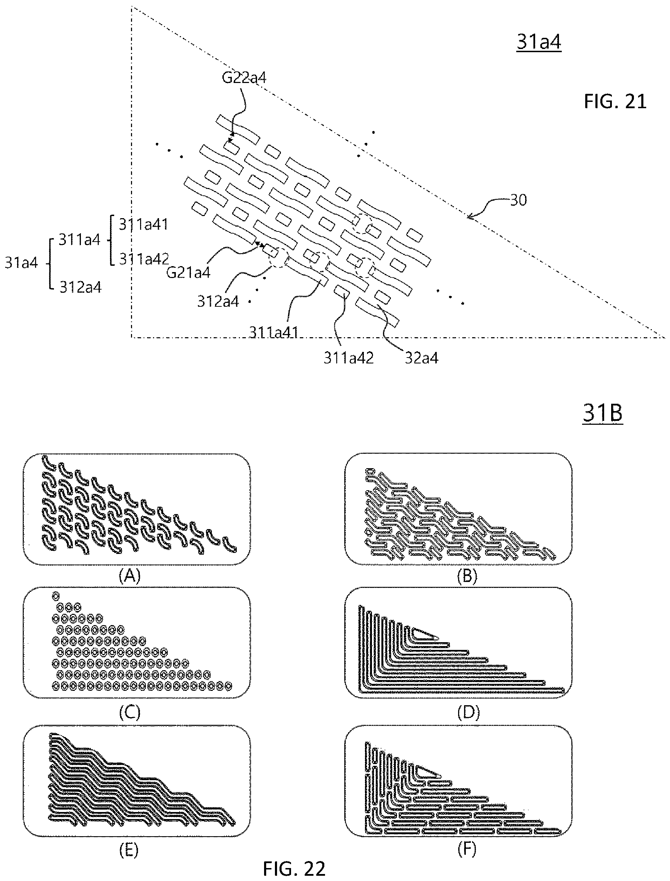

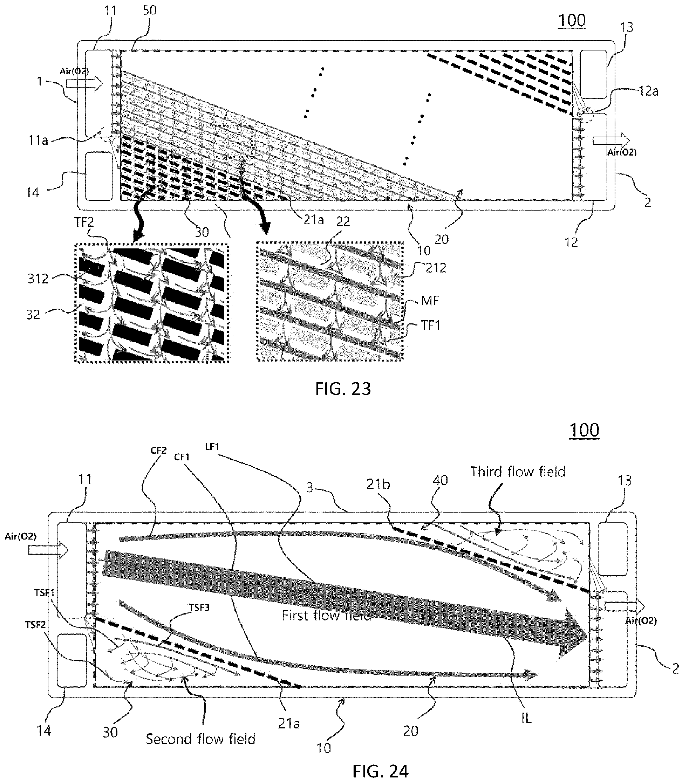

The diagonal flow field formed in the first block 20 and the stagnant flow field formed in the second block 30 and the third block 40 are described in detail in the description sections of FIGS. 22 and 23.

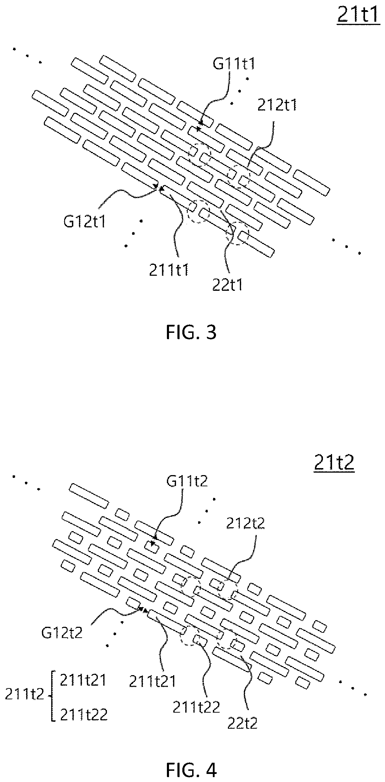

FIG. 2 is a schematic drawing of the first block of FIG. 1, and FIG. 3 is a schematic drawing of the first block line of the first block of FIG. 2. In addition, FIGS. 4 to 6 are schematic drawings illustrating first to third variant examples of the first block line of the first block of FIG. 3.

Referring to FIG. 2, the first block 20 according to an embodiment may include a plurality of first block lines 21 arranged at an 11th gap G11 and a plurality of first flow paths 22 formed between the first block lines 21.

Each of the first block lines 21 may form a first angle α1 with a first center line CL that passes through the center point so as to be perpendicular to the first side 1 of the body.

The first angle α1 may be a diagonal inclination of a first block line 21 installed between the gas inlet 11 and the gas outlet 12, which are arranged diagonally, and may be an acute angle greater than 0 degrees and less than 90 degrees.

Here, the angles formed by the first center line CL and each of the block lines 21 may be the same or different.

Specifically, as shown in FIG. 2, when the angles formed by the first center line CL and some of the block lines 21 are α1a and α1b, α1a and α1b may be the same or different angles.

Accordingly, when the angles formed by the first center line CL and each of the block lines 21 are adjusted, the width of a flow path 22 formed between the block lines 21 and the width of the flow path may be adjusted accordingly.

Accordingly, according to an embodiment, by adjusting the first angle α1 formed by the first center line CL and each of the block lines 21 to be the same or different, the flow velocity and flow rate of fluid passing through the first block 20 may be controlled depending on the width of the flow path 22 and the area of the flow path.

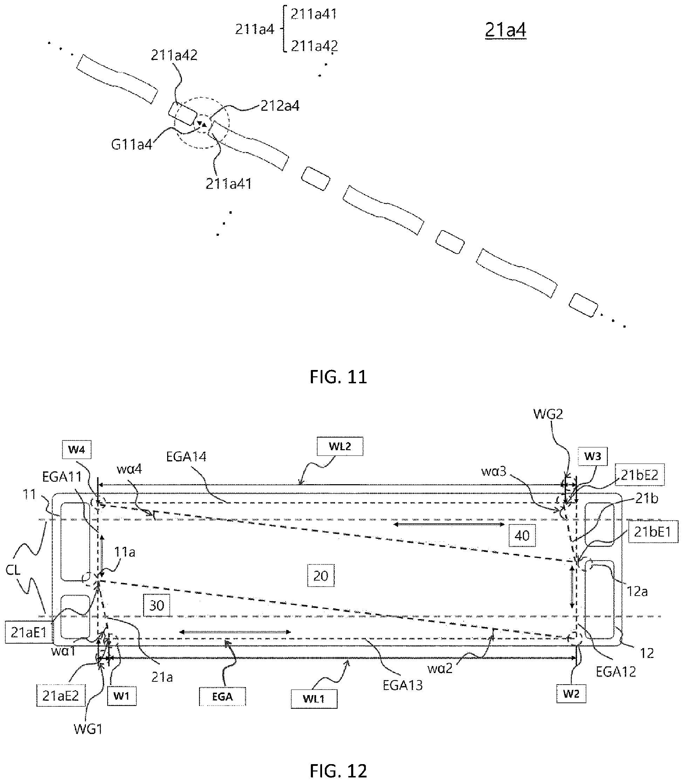

Here, the range of angle values of the first angle α1 formed by each of the first block lines 21 and the first center line CL is described in more detail in the description of FIG. 12 below.

In addition, each of the first block lines 21 according to an embodiment may include a plurality of first block members 211 arranged at a 12th gap G12 and a plurality of first mixing zones 212 formed by the 12th gap G12 and fluidly connecting the first flow paths 22.

As shown in FIG. 2, each of the first block members 211 may be aligned diagonally between the gas inlet 11 and the gas outlet 12, with each of the first block lines 21 forming an angle with the first center line CL.

In addition, the first flow paths 22 formed between the first block lines 21 and the first mixing zones 212 formed by the 12th gap G12 between the first block members 211 are fluidly connected, and turbulence fluidly connecting the first flow paths 22 may occur in the mixing zones 212.

Accordingly, according to this embodiment, by the first mixing zones 212 where turbulence occurs, by the diagonal flow field formed by the fluidic connection of the first flow paths 22, which are adjacent to each other and have laminar flow, gas diffusivity into the membrane-electrode assembly (MEA) is improved and moisture is discharged smoothly. Accordingly, the H₂O flooding phenomenon in the membrane-electrode assembly (MEA) and the first flow paths 22 may be prevented.

Referring to FIGS. 3 to 6, a first block member 211 forming the first block line 21 according to an embodiment may include one or more of a straight rib-shaped block, a column-shaped block, and a wavy rib-shaped block.

Hereinafter, a detailed description of the same content as described with reference to FIG. 2 is omitted, and only the necessary content is briefly described.

FIG. 3 is a schematic drawing illustrating an example of the first block line of the first block of FIG. 2.

Referring to FIG. 3, each of a plurality of 1t1-th block lines 21t1 may include a plurality of 1t1-th straight rib-shaped block members 211t1 and a plurality of 12t1-th mixing zones 212t1 formed between the 1t1-th straight rib-shaped block members 211t1 arranged at a 12t1-th gap G12t1.

In addition, the 1t1-th block lines 21t1 may be arranged at a 11t1-th gap G11t1 to form a plurality of 1t1-th flow paths 22t1, and some of the 12t1-th mixing zones 212t1 may be arranged to be aligned in a straight line along an imaginary line (not shown) perpendicular to the first center line CL.

FIG. 4 is a schematic drawing of a first variant example of the 1t1-th block line of the first block of FIG. 3.

Referring to FIG. 4, each of a plurality of 1t2-th block lines 21t2 may include a plurality of 1t21-th straight rib-shaped block members 211t21, a 1t-th rib-shaped block member 211t2 including a plurality of 1t22-th column-shaped block members 211t22 arranged between the 1t21-th straight rib-shaped block members 211t21, and a plurality of 12t2-th mixing zones 212t2 formed between the 1t21-th straight rib-shaped block members 211t21 arranged at a 12t2-th gap G12t2 and the 1t22-th column-shaped block members 211t22.

In addition, a plurality of 1t2-th block lines 21t2 may be arranged at a 11t2-th gap G11t2 to form a plurality of 1t2-th flow paths 22t2, and some of the 12t2-th mixing zones 212t2 may be arranged to be aligned in a straight line in the direction of an imaginary line (not shown) perpendicular to the first center line CL.

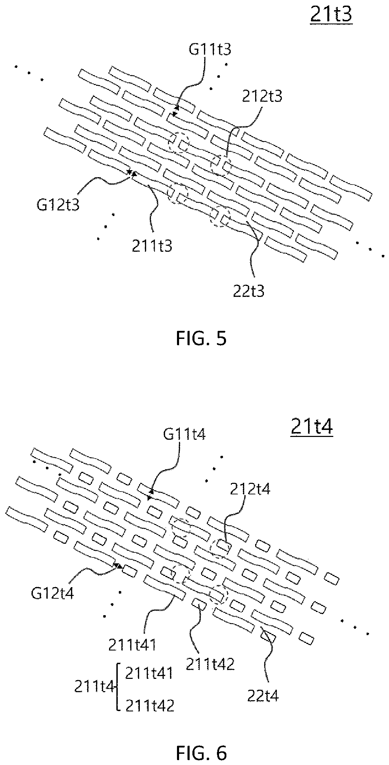

FIG. 5 is a schematic drawing of a second variant example of the 1t1-th block line of the first block of FIG. 3.

Referring to FIG. 5, each of a plurality of 1t3-th block lines 21t3 may include a plurality of 1t3-th wavy rib-shaped block members 211t3 and a plurality of 12t3-th mixing zones 212t3 formed between the 1t3-th wavy rib-shaped block members 211t3 arranged at a 12t3-th gap G12t3.

In addition, the 1t3-th block lines 21t3 may be arranged at a 1 1t3-th gap G11t3 to form a plurality of 1t3-th flow paths 22t3, and some of the 12t3-th mixing zones 212t3 may be arranged to be aligned in a straight line along an imaginary line (not shown) perpendicular to the first center line CL.

FIG. 6 is a schematic drawing of a third variant example of a 1t1-th block line 21t1 of the first block of FIG. 3.

Referring to FIG. 6, each of a plurality of 1t4-th block lines 21t4 may include a plurality of 1t41-th wavy rib-shaped block members 211t41, a 1t4-th mixed rib-shaped block member 211t4 including a plurality of 1t42-th column-shaped block members 211t42 arranged between the 1t41-th wavy rib-shaped block members 211t41, and a plurality of 12t4-th mixing zones 212t4 formed between a plurality of 1t4-th wavy rib-shaped block members 211t4 arranged at a 12t4-th gap G12t4 and the 1t42-th column-shaped block members 211t42.

In addition, the 1t4-th block lines 21t4 may be arranged at a 1 1t4-th gap G11t4 to form a plurality of 1t4-th flow paths 22t4, and some of the 12t4-th mixing zones 212t4 may be arranged to be aligned in a straight line along an imaginary line (not shown) perpendicular to the first center line CL.

However, the first block line 21 according to an embodiment and the first block member 211 forming the same are not limited to the shapes or arrangements described in FIGS. 3 to 6 and the related descriptions, and may be modified into block members having different shapes and block lines in which these block members are arranged in various orders.

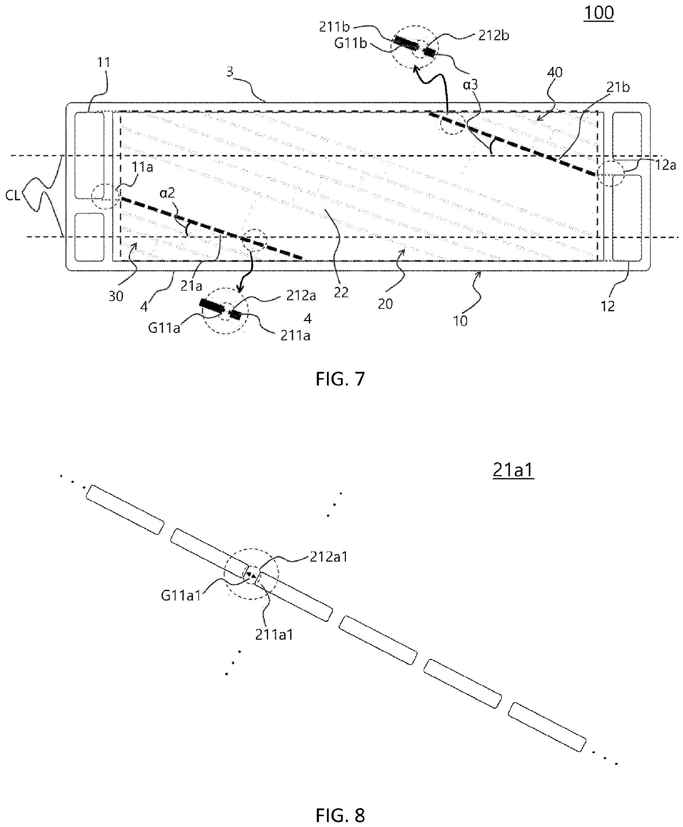

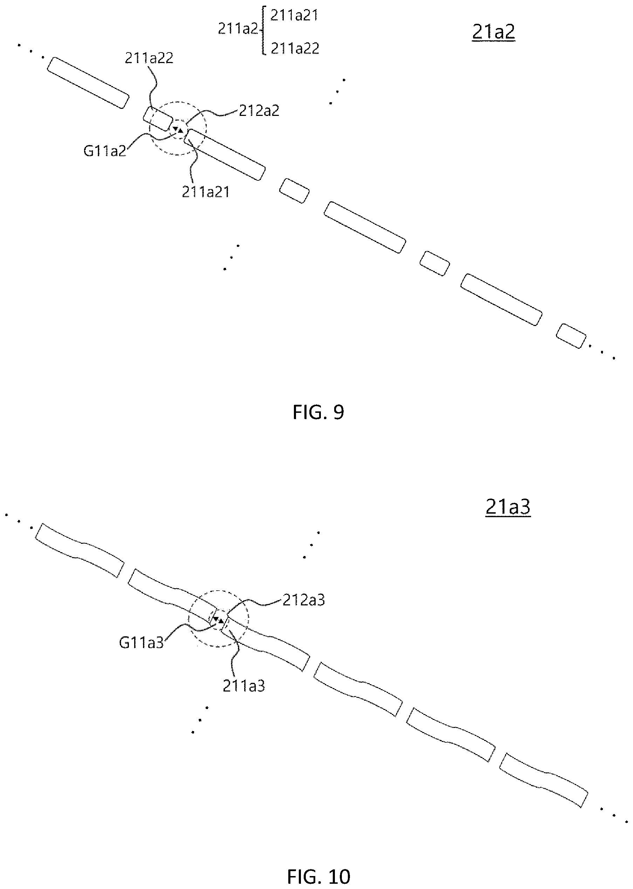

FIG. 7 is a schematic drawing of the first and second boundary block lines of the fuel cell separator of FIG. 2, and FIG. 8 is a schematic drawing of the first boundary block line of FIG. 7. FIGS. 9 to 11 are schematic drawings illustrating first to third variant examples of the first boundary block line of FIG. 8.

Referring to FIG. 7, the first block lines 21 according to an embodiment may include a first boundary block line 21a facing an end 11a of the gas inlet 11 and bordering the second block 30 and a second boundary block line 21b facing an end 12a of the gas outlet 12 and bordering the third block 40.

Here, the first boundary block line 21a may include a plurality of 1a-th block members 211a arranged at a 11a-th gap G11a and a plurality of 1a-th mixing zones 212a formed by the 11a-th gap G11a and configured to be fluidly connected to the first flow paths 22.

Referring to FIGS. 8 to 11, a 1a-th block member 211a forming the first boundary block line 21a according to an embodiment may include one or more of a straight rib-shaped block, a column-shaped block, and a wavy rib-shaped block.

Referring to FIG. 8, a 1a1-th boundary block line 21a1 may include a plurality of 1a1-th straight rib-shaped block members 211a1 and a plurality of 1a1-th mixing zones 212a1 formed between the 1a1-th straight rib-shaped block members 211a1 arranged at a 11a1-th gap G11a1.

Referring to FIG. 9, a 1a2-th boundary block line 21a2 may include a plurality of 1a21-th straight rib-shaped block members 211a21, a 1a2-th rib-shaped block member 211a2 including a plurality of 1a22-th column-shaped block members 211a22 arranged between the 1a21-th straight rib-shaped block members 211a21, and a plurality of 12a2-th mixing zones 212a2 formed between a plurality of 1a21-th straight rib-shaped block members 211a21 arranged at a 11a2-th gap G11a2 and the 1a22-th column-shaped block members 211a22.

Referring to FIG. 10, a 1a3-th boundary block line 21a3 may include a plurality of 1a3-th wavy rib-shaped block members 211a3 and a plurality of 1a3-th mixing zones 212a3 formed between the 1a3-th wavy rib-shaped block members 211a3 arranged at a 11a3-th gap G11a3.

Referring to FIG. 11, a 1a4-th boundary block line 21a4 may include a plurality of 1a41-th wavy rib-shaped block members 211a41, a 1a4-th rib-shaped block member 211a4 including a plurality of 1a42-th column-shaped block members 211a42 arranged between the 1a41-th wavy rib-shaped block members 211a41, and a plurality of 1a4-th mixing zones 212a4 formed between the 1a41-th wavy rib-shaped block members 211a41 arranged at a 11a4-th gap G11a4 and the 1a42-th column-shaped block members 211a42.

However, the first boundary block line 21a according to an embodiment and the 1a-th block member 211a forming the same are not limited to the shapes or arrangements described in FIGS. 8 to 11 and the related descriptions, and may be modified into block members having different shapes and block lines in which these block members are arranged in various orders.

In addition, the second boundary block line 21b according to an embodiment may include a plurality of 1b-th block members 211b arranged at a 11b-th gap G11b and a plurality of 1b-th mixing zones 212b formed by the 11b-th gap Glib and configured to be fluidly connected to the first flow paths 22.

Here, the arrays and shapes (not shown) of a second boundary block line 21b and a 1b-th block member 211b according to an embodiment may be the same as those of the first boundary block line 21a and the 1a-th block member 211a, and thus repeated descriptions are omitted.

FIG. 12 is a drawing schematically illustrating the change in the angle formed by the first center line CL and the first and second boundary block lines according to the lengths of the first and second boundary block lines and the gas inlet and gas outlet of FIG. 2.

Referring to FIG. 12, the first block 20, the second block 30, and the third block 40 according to an embodiment may form an electricity generating area (EGA) where electricity is produced.

In addition, the electricity generating area (EGA) according to an embodiment may include an 11th side EGA11 facing the gas inlet 11, a 12th side EGA12 located on the opposite side of the 11th side EGA11 and facing the gas outlet 12, and a 13th side EGA13 and 14th side EGA14 connecting the 11th side EGA11 and the 12th side EGA12 and located on opposite sides.

In addition, the electricity generating area (EGA) may include a first point W1 spaced apart by a W1-th gap WG1 from the point where the 11th side EGA11 and the 13th side EGA13 meet, a second point W2 where the 12th side EGA12 and the 13th side EGA13 meet, a third point W3 spaced apart by a W2-th gap WG2 from the point where the 12th side EGA12 and the 14th side EGA14 meet, and a fourth point W4 where the 11th side EGA11 and the 14th side EGA14 meet.

Hereinafter, the diagonal slope of the first boundary block line 21a with respect to the first center line CL according to an embodiment is described in detail.

The first boundary block line 21a according to an embodiment may include an 11th end 21aE1 facing the end 11a of the gas inlet 11 and a 12th end 21aE2 located opposite the 11th end 21aE1.

As shown in FIG. 12, the angle formed by the first boundary block line 21a and the first center line CL may have a variable value depending on the position of the 11th end 21aE1 of the first boundary block line 21a in the 11th side EGA11 and the position of the 12th end 21aE2 in the 13th side EGA13.

Specifically, the location of the 12th end 21aE2 of the first boundary block line 21a in the 13th side EGA13 may be between the first point W1 and the second point W2. When the length of the 13th side EGA13 is EL1 (cm), the first point W1 may be located at a point on the 13th side EGA13 that is 0.05 EL1(cm) away from the 11th side EGA11.

In addition, the position of the 11th end 21aE1 of the first boundary block line 21a in the 11th side EGA11 may be between the end 11a of the gas inlet 11 and a fourth point W4 depending on the change in the position of the end 11a of the gas inlet due to the change in the length of the gas inlet 11.

Referring to FIG. 12, the maximum angle formed by the first boundary block line 21a according to an embodiment and the first center line CL may be a first maximum angle wα1, and the minimum angle formed by the first boundary block line 21a and the first center line CL may be a first minimum angle wα2.

Accordingly, the first boundary block line 21a according to an embodiment and the first center line CL may form an angle between the first minimum angle wα2 and the first maximum angle wα1.

Specifically, when the 11th end 21aE1 of the first boundary block line 21a according to an embodiment faces the end 11a of the gas inlet 11 and the 12th end 21aE2 of the first boundary block line 21a is located at the first point W1 of the 13th side EGA13, the first boundary block line 21a and the first center line CL may form the first maximum angle wα1, which is a maximum angle.

Here, the first maximum angle wα1 formed by the first boundary block line 21a and the first center line CL may have a value between 85° and 88°.

In addition, when the 11th end 21aE1 of the first boundary block line 21a according to an embodiment faces the end 11a of the gas inlet 11 and the 12th end 21aE2 of the first boundary block line 21a is located at the second point W2 of the 13th side EGA13, the first boundary block line 21a and the first center line CL may form the first minimum angle wα2, which is a minimum angle.

Here, the first minimum angle wα2 formed by the first boundary block line 21a and the first center line CL may have a value between 6° and 8°.

Hereinafter, the diagonal slope of the second boundary block line 21b with respect to the first center line CL according to an embodiment is described in detail.

The second boundary block line 21b according to an embodiment may include a 21th end 21bE1 facing the end 12a of the gas outlet 12 and a 22th end 21bE2 located opposite the 21th end 21bE1.

As shown in FIG. 12, the angle formed by the second boundary block line 21b and the first center line CL may have a variable value according to the location of the 12th side EGA12 of the 21th end 21 bE 1 of the second boundary block line 21b and the location of the 14th side EGA14 of the 22th end 21bE2.

Specifically, the location of the 14th side EGA14 of the 22th end 21bE2 of the second boundary block line 21b may be between the third point W3 and the fourth point W4. When the length of the 14th side EGA14 is EL2 (cm), the third point W3 may be located at one point of the 14th side EGA14, which is spaced 0.05 EL2 (cm) from the 12th side EGA12.

In addition, the position of the 21th end 21 bE 1 of the second boundary block line 21b in the 12th side EGA12 may be between the end 12a of the gas outlet 12 and the third point W3 depending on the change in the position of the end 12a of the gas outlet due to the change in the length of the gas outlet 12.

Referring to FIG. 12, according to an embodiment, the maximum angle formed by the second boundary block line 21b and the first center line CL may be a second maximum angle wα3, and the minimum angle formed by the second boundary block line 21b and the first center line CL may be a second minimum angle wα4.

Accordingly, the second boundary block line 21b according to an embodiment and the first center line CL may form an angle between the second minimum angle wα4 and the second maximum angle wα3.

Specifically, when the 21th end 21bE1 of the second boundary block line 21b according to an embodiment faces the end 12a of the gas outlet 12 and the 22th end 21bE2 of the second boundary block line 21b is located at the third point W3 of the 14th side EGA14, the second boundary block line 21b and the first center line CL may form the second maximum angle wα3, which is a maximum angle.

Here, the second maximum angle wα3 formed by the second boundary block line 21b and the first center line CL may have a value between 85° and 88°.

In addition, when the 21th end 21bE1 of the second boundary block line 21b according to an embodiment faces the end 12a of the gas outlet 12 and the 22th end 21bE2 of the second boundary block line 21b is located at the fourth point W4 of the 14th side EGA14, the second boundary block line 21b and the first center line CL may form the second minimum angle wα4, which is a minimum angle.

Here, the second minimum angle wα4 formed by the second boundary block line 21b and the first center line CL may have a value between 6° and 8°.

According to an embodiment, the angle formed by the first boundary block line 21a and the first center line CL and the angle formed by the second boundary block line 21b and the first center line CL may be the same or different depending on embodiments.

In addition, each of the first block lines 21 of the first block 20 according to an embodiment and the first center line CL may form an angle between the first minimum angle wα2 and the first maximum angle wα1 or an angle between the second minimum angle wα4 and the second maximum angle wα3.

Here, the angles formed by each of the first block lines 21 of the first block 20 according to an embodiment and the first center line CL may be the same or different depending on embodiments.

In addition, the angle formed by each of the first block lines 21 of the first block 20 according to an embodiment and the first center line CL and the angle formed by the first and second boundary block lines 21a and 21b may be the same or different depending on embodiments.

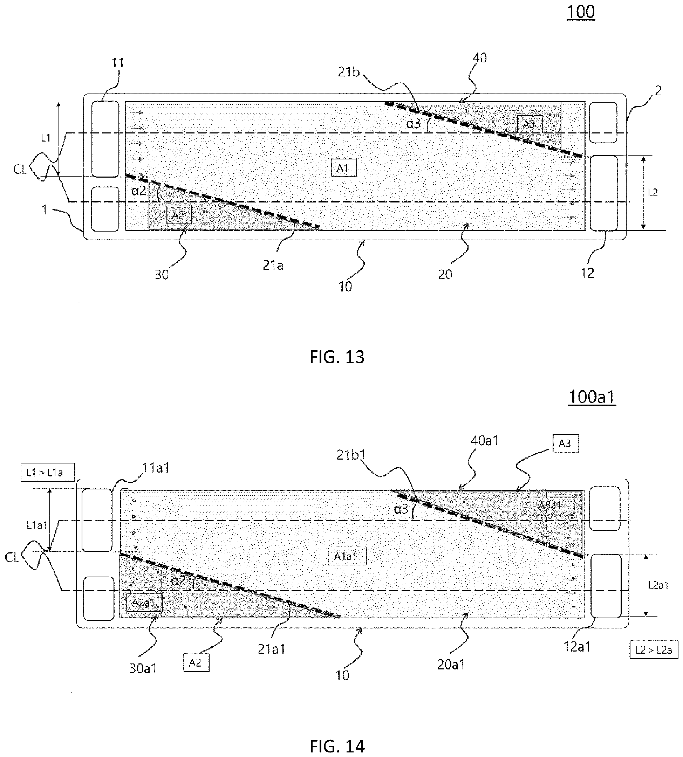

FIGS. 13 to 16 are schematic drawings showing changes in the areas of the first block 20, the second block 30, and the third block 40 according to changes in the angles formed by the first center line CL and the first and second boundary block lines of FIG. 12.

According to an embodiment, the first boundary block line 21a and the first center line CL may form a second angle α2, and the second boundary block line 21b and the first center line CL may form a third angle α3.

The second angle α2 and the third angle α3 may be the diagonal slopes of the first boundary block line 21a and the second boundary block line 21b installed between the gas inlet 11 and the gas outlet 12, which are arranged diagonally, and may be an acute angle greater than 0 degrees and less than 90 degrees.

Here, in the total block area, which is the sum of the areas of the first block 20, the second block 30, and the third block 40, the area ratio (%) of each area of the first block 20, the second block 30, and the third block 40 may vary depending on changes in one or more of the second angle α2, the third angle α3, an inlet length L1 of the gas inlet 11, and an outlet length L2 of the gas outlet 12.

Referring to FIG. 13, the area of the first block 20 separated by the first boundary block line 21a forming the second angle α2 with the first center line CL and the second boundary block line 21b forming the third angle α3 with the first center line CL may be A1, the area of the second block 30 may be A2, and the area of the third block 40 may be A3.

Referring to FIGS. 13 and 14, the angle formed by the 1a1-th boundary block line 21a1 and the first center line CL is equal to the second angle α2 formed by the first boundary block line 21a and the first center line CL, and the angle formed by a 2a1-th boundary block line 21b1 and the first center line CL is equal to the third angle α3 formed by the second boundary block line 21b and the first center line CL.

However, the 1a1-th inlet length L1a1 of a 1a1-th inlet 11a1 is deformed to be shorter than the inlet length L1 of the first inlet 11.

When the 1a1-th inlet length L1a1 of the 1a1-th inlet 11a1 is shorter than the inlet length L1 of the first inlet 11, as shown in FIG. 14, a 1a1-th area A2a1 of a 1a1-th block 30a1 is larger than a second area A2 of the second block 30 of FIG. 13.

In addition, a 2a1-th outlet length L2a1 of a 2a1-th outlet 12a1 is deformed to be shorter than an outlet length l2 of a first outlet 12.

When the 2a1-th outlet length L2a1 of the 2a1-th outlet 12a1 is shorter than the outlet length l2 of the first outlet 12, as shown in FIG. 14, a 2a1-th area A3a1 of the 2a1-th block 40a1 is larger than a third area A3 of the third block 40 of FIG. 13.

Here, as the 1a1-th area A2a1 of the 1a1-th block 30a1 and the 2a1-th area A3a1 of the 2a1-th block 40a1 increase, a 3a1-th area A1a1 of a 3a1-th block 20a1 decreases.

Accordingly, according to an embodiment, by modifying the 1a1-th inlet length L1a1 of the 1a1-th inlet 11a1 to be shorter than the inlet length L1 of the first inlet 12, and modifying the 2a1-th outlet length L2a1 of the 2a1-th outlet 12a1 to be shorter than the outlet length l2 of the first outlet 12, in the total block area, the ratio (%) of the 1a1-th area A2a1 of the 1a1-th block 30a1 and the 2a1-th area A3a1 of the 2a1-th block 40a1 may be increased, and the ratio (%) of the 3a1-th area A1a1 of the 3a1-th block 20a1 may be decreased.

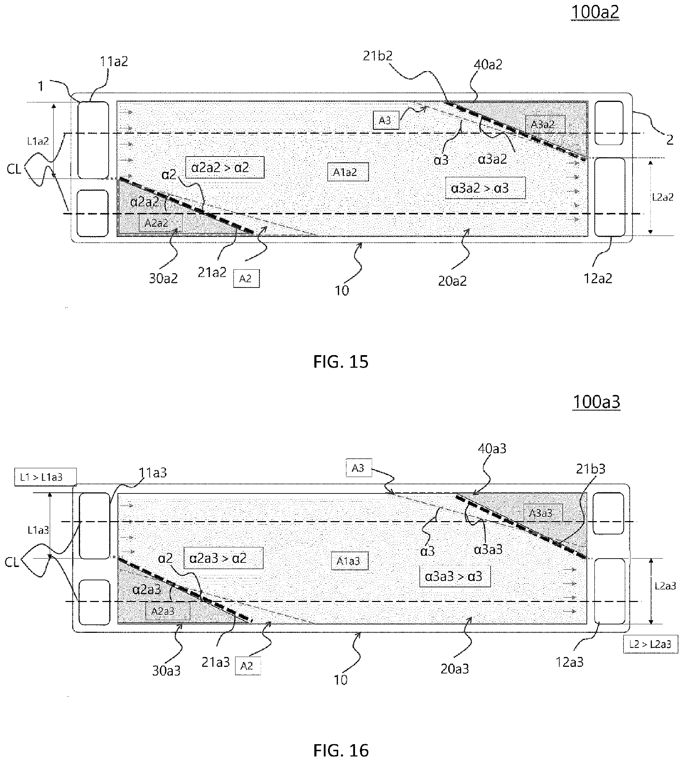

Referring to FIGS. 13 and 15, the inlet length L1 of the gas inlet 11 and a 1a2-th length L1a2 of a 1a2-th inlet 11a2 and the outlet length L2 of the gas outlet 12 and a 2a2-th length L2a2 of a 2a2-th gas outlet 12a2 are identical.

However, a 1a2-th angle α2a2 formed by the 1a2-th boundary block line 21a2 and the first center line CL is deformed to be larger than the second angle α2 formed by the first boundary block line 21a and the first center line CL.

When the 1a2-th angle α2a2 is larger than the second angle α2, as shown in FIG. 15, a 1a2-th area A2a2 of a 1a2-th block 30a2 is smaller than the second area A2 of the second block 30 of FIG. 13.

In addition, a 2a2-th angle α3a2 formed by a 2a2-th boundary block line 21b2 and the first center line CL is deformed to be larger than the third angle α3 formed by the second boundary block line 21b and the first center line CL.

When the 2a2-th angle α3a2 is larger than the third angle α3, as shown in FIG. 15, a 2a2-th area A3a2 of a 2a2-th block 40a2 is smaller than the third area A3 of the third block 40 of FIG. 13.

Here, as the 1a2-th area A2a2 of the 1a2-th block 30a2 and a 2a2-th area A3a2 of the 2a2-th block 40a2 decrease, a 3a2-th area A1a2 of a 3a2-th block 20a2 increases.

Accordingly, according to an embodiment, by making the 1a2-th angle α2a2 formed by the 1a2-th boundary block line 21a2 and the first center line CL larger than the second angle α2 formed by the first boundary block line 21a and the first center line CL, and making the 2a2-th angle α3a2 formed by the 2a2-th boundary block line 21b2 and the first center line CL larger than the third angle α3 formed by the second boundary block line 21b and the first center line CL, in the total block area, the ratio (%) of the 1a2-th area A2a2 of the 1a2-th block 30a2 and the 2a2-th area A3a2 of the 2a2-th block 40a2 may be reduced, and the ratio (%) of the 3a2-th area A1a2 of the 3a2-th block 20a2 may be increased.

Referring to FIGS. 13 and 16, a 1a3-th inlet length L1a3 of a 1a3-th inlet 11a3 is deformed to be shorter than the inlet length L1 of the first inlet 11, and a 2a3-th outlet length L2a3 of a 2a3-th outlet 12a3 is deformed to be shorter than the outlet length L2 of the first outlet 12.

In addition, a 1a3-th angle α2a3 formed by the 1a3-th boundary block line 21a3 and the first center line CL is deformed to be larger than the second angle α2 formed by the first boundary block line 21a and the first center line CL, and a 2a3-th angle α3a3 formed by a 2a3-th boundary block line 21b3 and the first center line CL is deformed to be larger than the third angle α3 formed by the second boundary block line 21b and the first center line CL.

When the 1a3-th inlet length L1a3 and a 2a3-th outlet length L2a3 are deformed to become shorter, and the 1a3-th angle α2a3 and the 2a3-th angle α3a3 are deformed to become larger, a 1a3-th area A2a3 of a 1a3-th block 30a3 and a 2a3-th area A3a3 of a 2a3-th block 40a3 decrease, and relatively, a 3a3-th area A1a3 of a 3a3-th block 20a3 increases.

Accordingly, according to an embodiment, by making the 1a3-th inlet length L1a3 shorter than the inlet length L1 of the first inlet 11, making the 2a3-th outlet length L2a3 shorter than the outlet length L2 of the first outlet 12, making the 1a3-th angle α2a3 larger than the second angle α2 formed by the first boundary block line 21a and the first center line CL, and making the 2a3-th angle α3a3 larger than the third angle α3 formed by the second boundary block line 21b and the first center line CL, in the total block area, the ratio (%) of the 1a3-th area A2a3 of the 1a3-th block 30a3 and a 2a3-th area A3a3 of the 2a3-th block 40a3 may be reduced, and the ratio (%) of a 3a3-th area A1a3 of the 3a3-th block 20a3 may be increased.

According to the fuel cell separator 100 according to an embodiment, since more energy is produced in the first block 20, which is installed in the diagonal direction between the gas inlet 11 and the gas outlet 12, than in the second block 30 and the third block 40, in the total block area, depending on the area ratio (%) of the first block 20 to the total block area, the fuel cell separator may be suitable for either a mobility device or an energy storage device.

Specifically, when the area ratio (%) of the second block 30 and the third block 40 of the fuel cell separator 100 is increased and the area ratio (%) of the first block 20 is decreased, in the first block 20 with a small gas passage area, the gas movement rate per unit time increases, and accordingly, the energy supply per unit time increases, so that rapid energy production, i.e., high energy production per unit time, may be achieved. Accordingly, the fuel cell separator 100 with a reduced area ratio (%) of the first block 20 according to an embodiment may be used in mobility devices such as automobiles and drones with a large energy fluctuation per unit time.

On the other hand, when the area ratio (%) of the second block 30 and the third block 40 of the fuel cell separator 100 decreases and the area ratio (%) of the first block 20 increases, in the first block 20, where a gas passage area increases, the gas supply area and gas diffusion area increase, so that high energy may be produced per unit area. Accordingly, the fuel cell separator 100 with an increased area ratio (%) of the first block 20 according to an embodiment may be used in a stationary power generation fuel cell, such as an energy storage device that requires low load fluctuation and continuous energy production.

The mechanism for controlling the fluidity of the flow field according to the area ratio (%) of the first block 20, the second block 30, and the third block 40 is described in detail in the relevant sections of FIGS. 23 and 24.

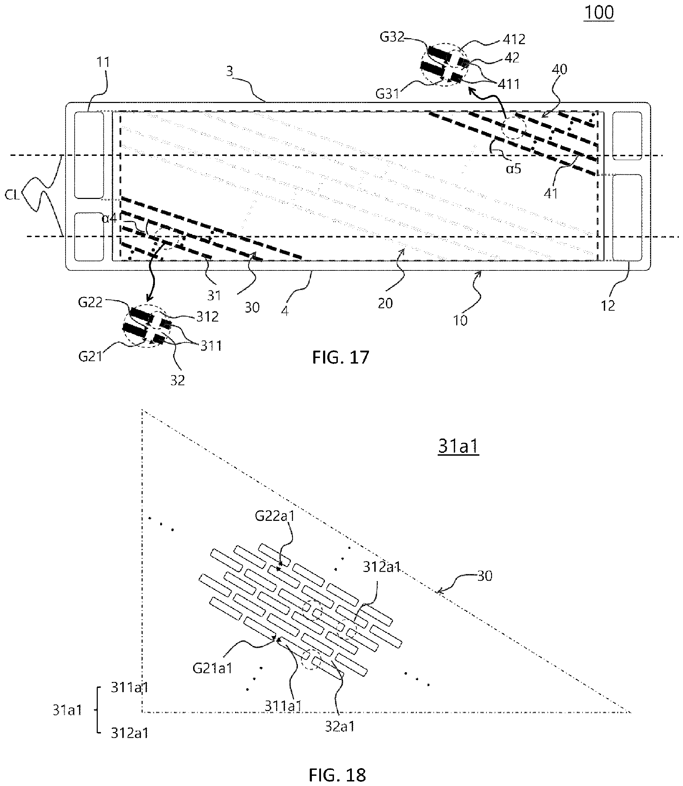

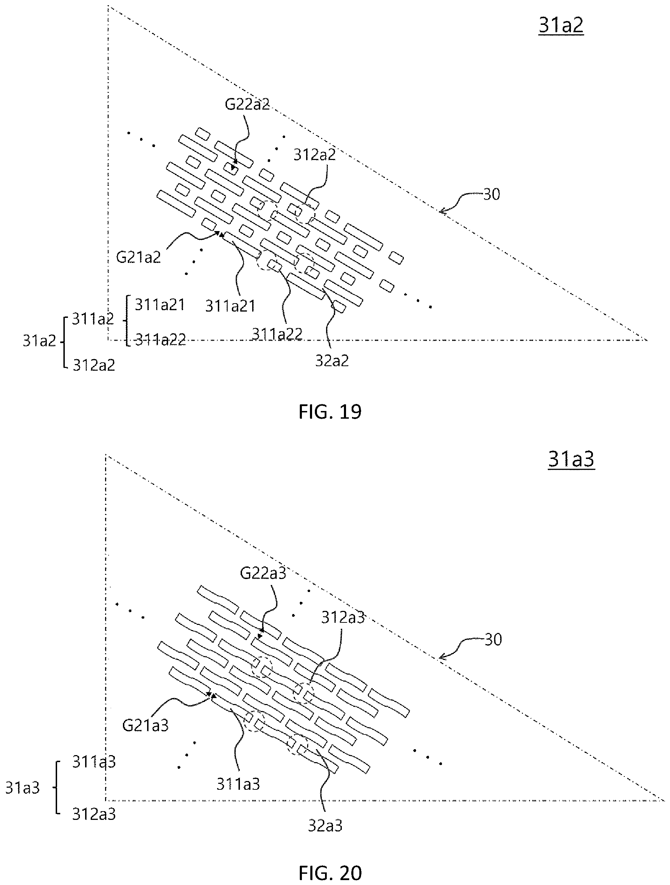

FIG. 17 is a schematic drawing of the second and third blocks of FIG. 1, and FIG. 18 is a schematic drawing of the second block line of the second block of FIG. 17. In addition, FIGS. 19 to 21 are schematic drawings of first to third variant examples of the second block line of the second block of FIG. 18.

Referring to FIG. 17, the second block 30 according to an embodiment may a plurality of second block lines 31 that form a fourth angle α4 with the first center line CL that passes through the center point of the body 10 so as to be perpendicular to the first side 1 of the body 10 and are arranged at a 22nd gap G22 and a plurality of second flow paths 32 formed between the second block lines 31.

Unlike the first angle α1, the second angle α2, and the third angle α3 which are acute angles, the fourth angle α4 may have a value between 0 and 360 degrees as an inclination of a second block line 31 with respect to the first center line CL. Accordingly, as shown in FIG. 22, a second block member 311 may have various shapes and arrangements.

Here, the angles formed by the first center line CL and each of the second block lines 31 may be the same or different. By adjusting the angle formed by the first center line CL and each of the second block lines 31, by controlling the width and area of the flow path, the velocity and flow rate of a fluid passing through the second block 30 may be controlled.

In addition, each of the second block lines 31 may include a plurality of second block members 311 arranged at a 21th gap G21 and a plurality of second mixing zones 312 formed by the 21th gap G21 and fluidly connecting the second flow paths 32.

As shown in FIG. 17, each of the second block lines 31 may be aligned with each of the second block members 311 at an angle to the first center line CL with a certain gap.

In addition, in the second mixing zones 312 formed between the second block members 311 arranged at the 21th gap G21, the second flow paths 32 formed by a 22nd gap G22 between the second block lines 31 may be fluidly connected. In the second mixing zones 312, turbulence may be generated that fluidly connects the second flow paths 32.

In addition, among the second flow paths 32, a second flow path 32 in contact with the first boundary block line 21a may be fluidly connected to the first block 20 through 1a-th mixing zones 212a formed in the first boundary block line 21a.

According to the second block 30 according to an embodiment, a stagnant flow field having a flow velocity and direction different from the flow velocity and direction of a flow field in a diagonal direction formed between the gas inlet 11 and the gas outlet 12 may be formed.

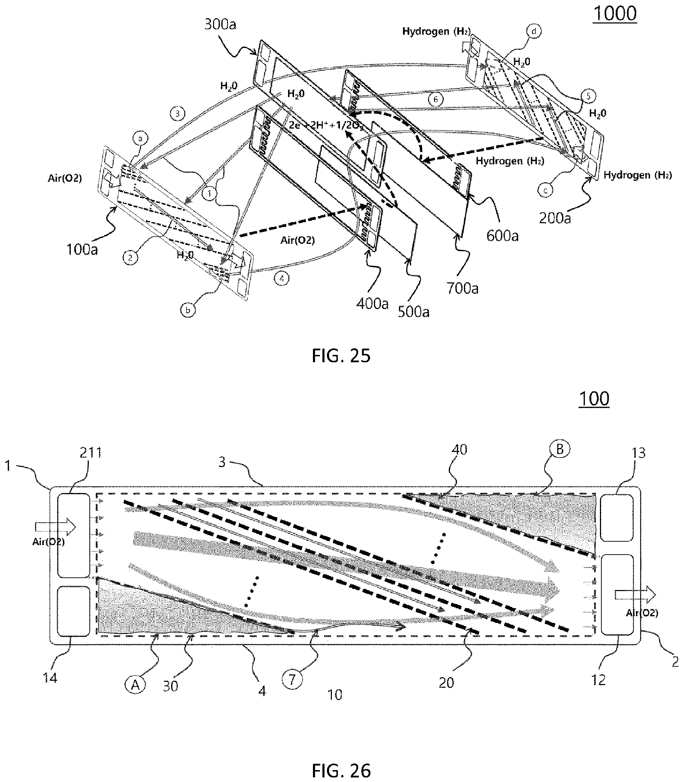

The stagnant flow field formed in the second block 30 is described in detail in the relevant sections of FIGS. 24 and 25.

Referring to FIGS. 18 to 21, the second block member 311 forming the second block line 31 according to an embodiment may include one or more of a straight rib-shaped block, a column-shaped block, and a wavy rib-shaped block.

Hereinafter, a detailed description of the same content as described with reference to FIG. 17 is omitted, and only the necessary content is briefly described.

FIG. 18 is a schematic drawing of the second block line of the second block of FIG. 17.

Referring to FIG. 18, each of a plurality of 2a1-th block lines 31a1 may include a plurality of 2a1-th straight rib-shaped block members 311a1 and a plurality of 21a1-th mixing zones 312a1 formed between the 2a1-th straight rib-shaped block members 311a1 arranged at a 21a1-th gap G21a1.

In addition, the 2a1-th block lines 31a1 may be arranged at a 22a1-th gap G22a1 to form a plurality of 2a1-th flow paths 32a1, and some of the 21a1-th mixing zones 312a1 may be arranged to be aligned in a straight line along an imaginary line (not shown) perpendicular to the first center line CL.

FIG. 19 is a schematic drawing of a first variant example of the second block line of the second block of FIG. 18.

Referring to FIG. 19, each of a plurality of 2a2-th block lines 31a2 may include a 2a2-th rib-shaped block member 311a2 including a plurality of 2a22-th column-shaped block members 311a22 arranged between the 2a21-th straight rib-shaped block members 311a21 and a plurality of 2a21-th straight rib-shaped block members 311a21 and a plurality of 2a2-th mixing zones 312a2 formed between the 2a21-th straight rib-shaped block members 311a21 and the 2a22-th column-shaped block members 311a22 arranged at a 21a2-th gap G21a2.

In addition, a plurality of 2a2-th block lines 31a2 may be arranged at a 22a2-th gap G22a2 to form a plurality of 2a2-th flow paths 32a2, and some of a plurality of 32a2-th mixing zones 312a2 may be arranged to be aligned in a straight line along an imaginary line (not shown) perpendicular to the first center line CL.

FIG. 20 is a schematic drawing of a second variant example of the second block line of the second block of FIG. 18.

Referring to FIG. 20, each of a plurality of 2a3-th block lines 31a3 may include a plurality of 2a31-th wavy rib-shaped block members 311a3 and a plurality of 32a3-th mixing zones 312a3 formed between the 2a31-th wavy rib-shaped block members 311a3 arranged at a 21a3-th gap G21a3.

In addition, the 2a3-th block lines 31a3 may be arranged at a 22a3-th gap G22a3 to form a plurality of 2a3-th flow paths 32a3, and some of the 32a3-th mixing zones 312a3 may be arranged to be aligned in a straight line along an imaginary line (not shown) perpendicular to the first center line CL.

FIG. 21 is a schematic drawing of a third variant example of the second block line of the second block of FIG. 18.

Referring to FIG. 21, each of a plurality of 2a4-th block lines 31a4 may include a 2a4-th mixed rib-shaped block member 311a4 including a plurality of 2a42-th column-shaped block members 311a42 arranged between a plurality of 2a41-th wavy rib-shaped block members 311a41 and the 2a41-th wavy rib-shaped block members 311a41 and a plurality of 2a4-th mixing zones 312a4 formed between the 2a41-th wavy rib-shaped block members 311a41 and the 2a42-th column-shaped block members 311a42 arranged at a 21a4-th gap G21a4.

In addition, the 2a4-th block lines 31a4 may be arranged at the 22a4-th gap G22a4 to form a plurality of 2a4-th flow paths 32a4, and some of the 2a4-th mixing zones 312a4 may be arranged to be aligned in a straight line along an imaginary line (not shown) perpendicular to the first center line CL.

However, the second block line 31 according to an embodiment and the second block member 311 forming the same are not limited to the shapes or arrangements described in FIGS. 18 to 21 and the related descriptions, and may be modified into block members having different shapes and block lines in which these block members are arranged in various orders.

FIG. 22 is a schematic drawing illustrating a plurality of another variant examples of the second block line of the second block of FIG. 18.

Referring to FIG. 22, in addition to the shapes or arrangements described in FIGS. 18 to 21 and the related explanatory notes, the second block member 311 may include a crescent-shaped rib (A), a folded single rib (B), a dot-shaped rib (C), a vertically folded long rib (D), a wavy long rib (E), and a single-rib and folded-rib mixed rib (F).

In addition, the third block 40 according to an embodiment may include a plurality of third block lines 41 that forms a fifth angle α5 with the first center line CL that passes through the center point of the body so as to be perpendicular to the first side 1 of the body and is arranged at a 31nd gap G31 and a plurality of third flow paths 42 formed between the third block lines 41.

Unlike the first angle α1, the second angle α2, and the third angle α3 which are acute angles, the fifth angle α5 may have a value between 0 and 360 degrees as the slope of a third block line 41 with respect to the first center line CL. As shown in FIG. 22, a third block member 411 may have various shapes and arrangements.

Here, the angles formed by the first center line CL and each of the third block lines 41 may be the same or different. By controlling the angles formed by the first center line CL and each of the third block lines 41, by controlling the width of a flow path, the velocity and flow rate of fluid passing through the third block 40 may be controlled.

In addition, each of a plurality of third block lines 41 may include a plurality of third block members 411 arranged at a 31th gap G31 and a plurality of third mixing zones 412 formed by the 31th gap G31 and fluidly connecting the third flow paths 42.

As shown in FIG. 17, each of the third block lines 41 may be formed by forming an angle between each of the third block members 411 and the first center line CL and arranging the third block members 411 at a certain gap.

In addition, in the third mixing zones 412 formed between a plurality of third block members 311 arranged at the 31th gap G31, the third flow paths 42 formed by a 32nd gap G32 between the third block lines 41 may be fluidly connected. In third mixing zones 412, turbulence may occur that fluidly connects the third flow paths 42.

In addition, a third flow path 42 in contact with the second boundary block line 21b among the third flow paths 42 may be fluidly connected to the first block 20 through 1b-th mixing zones 212b formed in the second boundary block line 21b.

According to the third block 40 according to an embodiment, a stagnant flow field having a flow velocity and direction different from the flow velocity and direction of a flow field in a diagonal direction formed between the gas inlet 11 and the gas outlet 12 may be formed.

The stagnant flow field formed in the third block 40 is described in detail in the relevant sections of FIGS. 24 and 25.

Here, the array and shape (not shown) of the third block line 41 and the third block member 411 according to an embodiment may be identical to those of the second block line 31 and the second block member 311 described above, and thus repeated descriptions are omitted.

FIG. 23 is a schematic diagram illustrating fluid flow in the first and second blocks of the fuel cell separator of FIG. 1, and FIG. 24 is a schematic diagram illustrating a complex flow field formed in the fuel cell separator of FIG. 1 by the fluid flow of FIG. 23.

Referring to FIG. 23, air (O₂) flowing into the gas inlet 11 may pass through the first flow paths 22 formed diagonally in the first block 20 and become a plurality of main-flows MF directed to the gas outlet 12 located in the diagonal direction. The main-flows MF formed in the diagonal direction may be fluidly connected to each other by the first mixing zones 212 where the first turbulence flow TF1 is generated, and may develop into the first flow field in the diagonal direction.

Referring to FIG. 24, the first flow field formed by the first block 20 may include a first linear diagonal flow field LF1, a first curved diagonal flow field CF1, and a second curved diagonal flow field CF2.

The first linear diagonal flow field LF1 may be formed along the imaginary line IL connecting the centers of the opposite sides of the gas inlet 11 and the gas outlet 12.

Specifically, the first linear diagonal flow field LF1 may be developed into a linear flow field in which the main-flows MF located on the left and right sides of the imaginary line IL are connected to each other by the first mixing zones 212 and flow in a diagonal direction between the gas inlet 11 and the gas outlet 12. That is, the first linear diagonal flow field LF1 may be formed by the flow of the main-flows MF, which exhibits a linear diagonal flow pattern centered on the imaginary line IL between the gas inlet 11 and the gas outlet 12 located in the diagonal direction.

The first curved diagonal flow field CF1 may be formed between the second block 30 and the first linear diagonal flow field LF1, with the second block 30 as a boundary.

Specifically, the first curved diagonal flow field CF1 may be developed into a curved flow field in which the main-flows MF, which are connected to each other by the first linear diagonal flow field LF1 and the first mixing zones 212 between the first boundary block line 21a and the fourth side 4, flow diagonally between the gas inlet 11 and the gas outlet 12. That is, as shown in FIG. 24, the first curved diagonal flow field CF1 may be formed by the flow of the main-flows MF formed in a curved section between the first linear diagonal flow field LF1 and the first boundary block line 21a and the fourth side 4.

In addition, the second curved diagonal flow field CF2 may be formed between the third block 40 and the first linear diagonal flow field LF1, with the third block 40 as a boundary.

Specifically, the second curved diagonal flow field CF2 may be developed into a curved flow field in which the main-flows MF, which are connected to each other by the first linear diagonal flow field LF1 and the first mixing zones 212 between the second boundary block line 21b and the third side 3, flow diagonally between the gas inlet 11 and the gas outlet 12. That is, as shown in FIG. 24, the second curved diagonal flow field CF2 may be formed by the flow of the main-flows MF formed in a curved section between the first linear diagonal flow field LF1 and the second boundary block line 21b and the third side 3.

However, the gas flow occurring in the boundary region (not shown) of each of the first curved diagonal flow field CF1 according to an embodiment and the second flow field and the first linear diagonal flow field LF1 formed in the second block 30 does not form independent flow fields such as the first to third flow fields, and thus repeated descriptions are omitted.

Referring back to FIG. 23, gas (e.g., air (O₂)) introduced into the gas inlet 11 may be supplied to the second block 30 through the side of the second block 30 adjacent to the end 11a of the gas inlet 11 and the 1a-th mixing zones 212a of the first boundary block line 21a. Here, as shown in FIG. 22, gas (e.g., air (O₂)) supplied to the second block 30 through the 1a-th mixing zones 212a of the first boundary block line 21a is turbulence, and the turbulence supplied in this manner is supplied as turbulence to each of the second flow paths 32 through the mixing zones 312 fluidly connecting the second flow paths 32.

In addition, the gas inlet 11 and a first block 20 face each other in the direction in which gas (e.g., air (O₂)) flows, so most of gas (e.g., air (O₂)) flowing into the gas inlet 11 is supplied to the first block 20 through the first flow paths 22. The second block 30 is located away from the end 11a of the gas inlet 11, so that a very small amount of gas (e.g., air (O₂)) other than the air supplied to the first block 20 is supplied to the side of the second block 30.

Accordingly, in the second block 30 installed adjacent to the first corner area A1 of the first side 1 of the body 10, a second flow field is formed by the complex turbulence flow described above.

Referring back to FIG. 24, the second flow field formed in the second block 30 may include a plurality of first turbulent stagnant flow fields TSF1 toward the first corner area A1, a plurality of second turbulent stagnant flow fields TSF2, which return from the first corner area A1, and a plurality of third turbulent stagnant flow fields TSF3 formed in the direction away from the first corner area A1.

In addition, a third flow field may be formed in the third block 40. However, the second flow field formed in the second block 30 and the third flow field formed in the third block 40 are formed by the same mechanism, and the flow field forming the third flow field and the flow field forming the second flow field are identical to each other, so a detailed description of the third flow field is omitted.

Fluidity including the flow velocity (flow rate) of the first linear diagonal flow field LF1 and the first to second curved diagonal flow fields CF1 and CF2 may be controlled depending on a length L1 of the gas inlet 11, a length L2 of the gas outlet, second and third angles α2 and α3 formed by first and second boundary block lines 21a and 21b and the first center line CL, and the first angle α1 formed by each of the first block lines 21 and a first center line CL.

Referring back to FIGS. 13 to 16, as the length L1 of the gas inlet 11 and the length L2 of the gas outlet decrease, the area ratio (%) of the second block 30 and the third block 40 of the fuel cell separator 100 increases and the area ratio (%) of the first block 20 decreases.

As the area ratio (%) of the first block 20 decreases and the curved section where first and second curved diagonal flow fields CF1 and CF2 are formed decreases, the first and second curved diagonal flow fields CF1 and CF2 also decrease. As a result, the transport ratio of gas introduced into the first block 20 by the first linear diagonal flow field LF1 increases.

Here, since the gas travel distance between the gas inlet 11 and the gas outlet 12 is shorter in the first linear diagonal flow field LF1 than in the first and second curved diagonal flow fields CF1 and CF2, as the gas movement rate by the first linear diagonal flow field LF1 increases, the gas movement rate per unit time and the energy supply per unit time supplied to the first block 20 may increase.

Accordingly, in the fuel cell separator 100 according to an embodiment, fluidity including the flow velocity (flow rate) of the first linear diagonal flow field LF1 and the first to second curved diagonal flow fields CF1 and CF2 may be controlled depending on the length L1 of the gas inlet 11, the length L2 of the gas outlet, the second and third angles α2 and α3 formed by the first and second boundary block lines 21a and 21b and the first center line CL, and the first angle α1 formed by each of the first block lines 21 and a first center line CL. Accordingly, the fuel cell separator 100 may be selectively applied to mobility devices and energy storage devices.

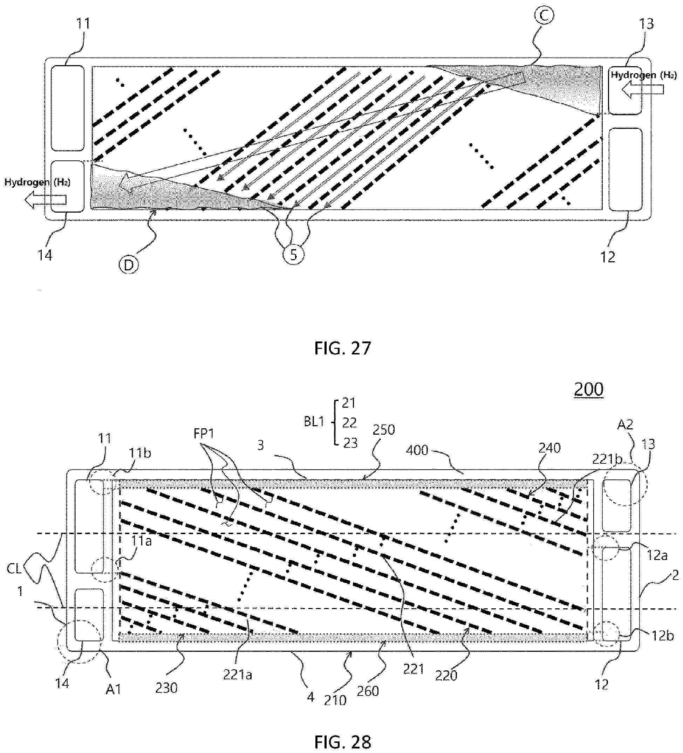

FIG. 25 is a schematic diagram illustrating the flow paths of fluid and H₂O in a fuel cell including the fuel cell separator of FIG. 1, FIG. 26 is a schematic diagram illustrating the flow paths of fluid and H₂O in the fuel cell separator of FIG. 1 in the fuel cell of FIG. 25, and FIG. 27 is a schematic diagram illustrating the flow paths of fluid and H₂O in the fuel cell separator into which hydrogen is introduced in the fuel cell of FIG. 25.

Referring to FIG. 25, a fuel cell 1000 may include a fuel cell cathode separator 100a, a fuel cell anode separator 200a installed on the opposite side of the fuel cell cathode separator 100a, a membrane-electrode assembly (MEA) 300a located between the fuel cell cathode separator 100a and the fuel cell anode separator 200a, a first gasket 400a located between the fuel cell cathode separator 100a and the membrane-electrode assembly (MEA) 300a, a first diffusion layer 500a, a second gasket 600a located between the fuel cell anode separator 200a and the membrane-electrode assembly (MEA) 300a, and a second diffusion layer 700a.

Here, the fuel cell separator 100 according to an embodiment and the fuel cell cathode separator 100a included in the fuel cell 1000 have the same configuration. However, the block line of the fuel cell cathode separator 100a of the cell 1000 is not limited to being formed to form an angle with the first center line CL, and may be formed in a direction parallel to the first center line CL or may be formed as a meandering flow path structure that does not form a certain angle with the first center line CL center line.

When H₂O generated in a membrane-electrode assembly 300a during operation of the fuel cell 1000 is not discharged smoothly and the H₂O flooding phenomenon occurs, the power generation efficiency of the fuel cell 1000 may be reduced or it may cause a malfunction.

In addition, when H₂O generated in the membrane-electrode assembly 300a during operation of the fuel cell 1000 is excessively discharged and the membrane-electrode assembly 300a dries out, the power generation efficiency may decrease or the membrane-electrode assembly 300a may be damaged.

The H₂O flooding phenomenon of the membrane-electrode assembly 300a and the drying phenomenon of membrane-electrode assembly described above may be prevented by the first block 20, in which the first flow field consisting of the first linear diagonal flow field LF1, the first curved diagonal flow field CF1, and the second curved diagonal flow field CF2 according to the fuel cell separator 100 according to an embodiment is formed, and the second and third blocks 30 and 40, in which the second and third flow fields consisting of a plurality of turbulent stagnant flow fields is formed.

Hereinafter, with reference to FIGS. 25 to 27, the prevention of the H₂O flooding phenomenon of the membrane-electrode assembly 300a and the drying phenomenon of membrane-electrode assembly by the fuel cell separator 100 is described in detail.

As shown in FIG. 25, when air (O₂) is supplied to the fuel cell cathode separator 100a, some of the supplied air (O₂) moves to the membrane-electrode assembly 300a through the first diffusion layer 500a. In addition, when hydrogen (H₂) is supplied to the fuel cell anode separator 200a, the supplied hydrogen (H₂) is decomposed into 2e⁻+2H⁺ and moves to the membrane-electrode assembly 300a through a second diffusion layer 700a. In this way, air (O₂) (1/2O₂) and hydrogen (H₂) (2e⁻+2H⁺) moved to the membrane-electrode assembly 300a combine in the membrane-electrode assembly 300a to produce H₂O. The H₂O generated in the membrane-electrode assembly 300a is supplied to the membrane-electrode assembly 300a, but does not react with hydrogen (H₂) and is discharged together with air (O₂) discharged to the fuel cell cathode separator 100a through a first gas diffusion layer 500a (①).

Here, in the first block 20 of the fuel cell separator 100 according to an embodiment, H₂O generated in the membrane-electrode assembly 300a facing the first block 20 may be smoothly discharged by turbulence generated in the first mixing zones 212 together with laminar flow in the first flow paths 22. In addition, in the second and third blocks 30 and 40, H₂O generated in the membrane-electrode assembly 300a may be smoothly discharged by a turbulent stagnant flow field formed by a plurality of second and third mixing zones 312 and 412 and a plurality of second and third flow paths 32 and 42.

Accordingly, according to the fuel cell separator 100 according to an embodiment, in the first to third blocks 20, 30, and 40, H₂O generated in the membrane-electrode assembly 300a is smoothly discharged, so that the H₂O flooding phenomenon in the membrane-electrode assembly 300a may be prevented.

The H₂O discharged in this way may move in the diagonal direction by the first flow field (see FIG. 23) including the first linear diagonal flow field LF1, the first curved diagonal flow field CF1 and the second curved diagonal flow field CF2 formed in the fuel cell cathode separator 100a and may be discharged through the gas outlet 12 (②).

The region ⓐ of the fuel cell cathode separator 100a illustrated in FIG. 25 is a region of the fuel cell cathode separator 100a facing the first diffusion layer 500a and corresponds to the second block 30 according to an embodiment (see FIG. 24).

In region ⓐ of the fuel cell cathode separator 100a corresponding to the second block 30 according to an embodiment, a second flow field including the turbulent stagnant flow fields TSF1 to TSF3 (see FIG. 24) may be generated.

As described, H₂O generated in the membrane-electrode assembly 300a may be smoothly discharged to region ⓐ of the fuel cell cathode separator 100a by the turbulent stagnant flow fields TSF 1 to TSF3 generated in region ⓐ.

However, H₂O discharged from the membrane-electrode assembly 300a to region ⓐ of the fuel cell cathode separator 100a is not discharged smoothly toward the gas outlet 12 due to the turbulent stagnant flow fields TSF1 to TSF3 generated in region ⓐ. Accordingly, as the fuel cell 1000 is operated, the concentration of H₂O in region ⓐ increases.

In region ⓑ of the fuel cell cathode separator 100a corresponding to the third block 40 according to an embodiment, a third flow field including the turbulent stagnant flow fields TSF1 to TSF3 (not shown) may be generated.

However, detailed descriptions of H₂O discharge from region ⓑ of the fuel cell cathode separator 100a shown in FIG. 25 to region ⓑ of the membrane-electrode assembly 300a, H₂O discharge from region ⓑ of the fuel cell cathode separator 100a to the gas outlet 12, and the increase in H₂O concentration are the same as those in region ⓐ of the fuel cell cathode separator 100a, so the detailed descriptions are omitted.

Referring to FIG. 25, when the concentration of H₂O in region ⓐ and region ⓑ exceeds a certain level, H₂O in region ⓐ moves to region ⓓ of the fuel cell anode separator 200a due to the difference in concentration (③), and H₂O in region ⓑ moves to region ⓒ of an anode separator 200a (④).

In this way, H₂O moved to region ⓒ of the fuel cell anode separator 200a may move through the fuel cell anode separator 200a by hydrogen (H₂) flowing into the fuel cell anode separator 200a (⑤).

In this way, H₂O moved to the fuel cell anode separator 200a may move to the membrane-electrode assembly 300a by electroendosmosis caused by the operation of the fuel cell 1000 (⑥).

In addition, some of H₂O in region ⓐ of the fuel cell cathode separator 100a may be supplied to the membrane-electrode assembly 300a without diffusing to region ⓒ (⑦).

Accordingly, according to the fuel cell separator 100 according to an embodiment, a three-dimensional H₂O circulation path consisting of the processes ①->② (H₂O discharge from the fuel cell cathode separator 100a) in which H₂O is discharged from the membrane-electrode assembly 300a to the outside of the fuel cell 1000, the processes ④->⑤ (H₂O discharge from the fuel cell anode separator 200a), the processes ①->③ and ④)->⑤->⑥ in which H₂O generated in the fuel cell 1000 is circulated inside the fuel cell 1000, and the process region ⓐ->⑦ may be generated.

That is, by the three-dimensional H₂O circulation path of the fuel cell 1000 including the fuel cell separator 100 according to an embodiment, H₂O generated in the membrane-electrode assembly 300a may be smoothly discharged to the outside of the fuel cell 1000, thereby preventing the H₂O flooding phenomenon. In addition, a portion of the H₂O discharged from the membrane-electrode assembly 300a through the three-dimensional H₂O circulation path may be supplied to the membrane-electrode assembly 300a, thereby preventing the membrane-electrode assembly 300a from drying out.

As described above, according to the fuel cell 1000 to which the fuel cell separator 100 according to an embodiment is applied, moisture may be supplied to the membrane-electrode assembly 300a by a three-dimensional H₂O circulation path penetrating the fuel cell 1000 without the supply of an external humidifying medium.

According to the fuel cell 1000 including the fuel cell separator 100 according to an embodiment, there is no need to install a humidifying device for humidifying the fuel cell 1000 in the fuel cell system (not shown), so the overall volume and weight of the fuel cell system may be reduced.

FIG. 28 is a schematic drawing of a fuel cell separator according to the second embodiment of the present invention.

Referring to FIG. 28, a fuel cell separator 200 according to an embodiment may include a body 210, a first block 220, a second block 230, a third block 240, and a pair of fluid paths.

Hereinafter, detailed descriptions of the body 210, the first block 220, the second block 230, and the third block 240 according to a second embodiment of the present invention having the same configuration with the body 10, the first block 20, the second block 30, and the third block 40 of the fuel cell separator 100 according to the first embodiment of the present invention shown in FIGS. 1 to 23 are omitted.

Referring to FIG. 28, a pair of fluid paths of the fuel cell separator 200 according to an embodiment may be installed parallel to the first center line CL penetrating the center point of the body 210 and perpendicular to the first side 1 of the body 210, and may be installed spaced apart from each other with the first block 220, the second block 230, and the third block 240 therebetween.

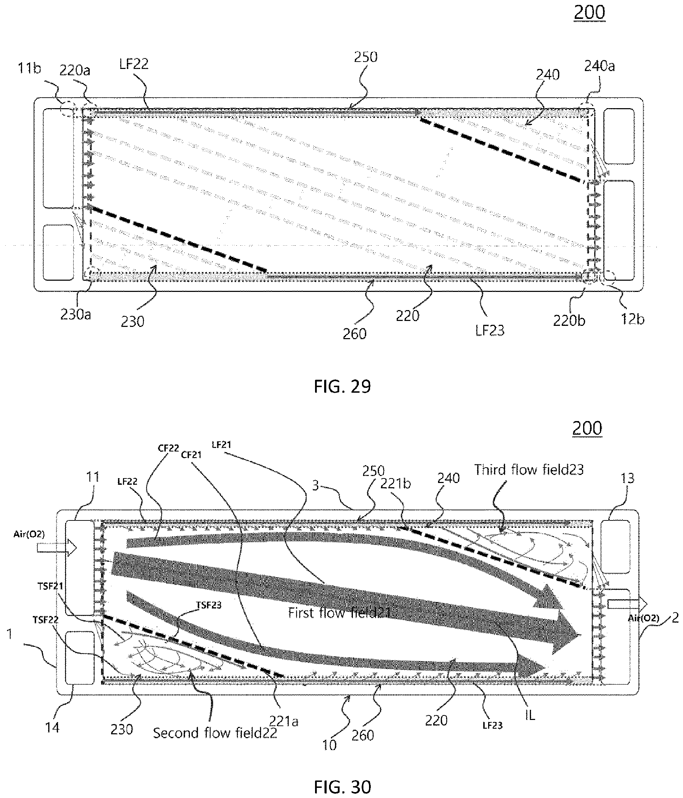

FIG. 29 is a schematic drawing of a pair of fluid paths in the fuel cell separator of FIG. 28.

Referring to FIG. 29, a pair of fluid paths according to an embodiment may include a first fluid path 250 and a second fluid path 260.

According to an embodiment, the first fluid path 250 may be installed between the first side 1 and the second side 2 so as to face one end 11b of the gas inlet 11 and may be fluidly connected to the first block 220 and the third block 240.

Specifically, the first fluid path 250 may be installed to face the one end 11b of the gas inlet 11 by extending from a portion 220a where the first block 220 begins to a portion 240a where the third block 240 ends along the side of the first block 220.

In addition, according to an embodiment, a second fluid path 260 may be installed between the first side 1 and the second side 2 so as to face one end 12b of the gas outlet 12 and may be fluidly connected to the first block 220 and the second block 230.

Specifically, the second fluid path 260 may be installed to face the one end 12b of the gas outlet 12 by extending from a portion 230a where the second block 230 begins to a portion 220b where the first block 220 ends along the side of the second block 230.

According to an embodiment, in the first fluid path 250, a 22th linear flow field LF22 may be formed by fluid flowing in from the first gas inlet 11. In the second fluid path 260, a 23th linear flow field LF23 may be formed by fluid flowing in from the second block 230.

The 22th linear flow field LF22 formed in the first fluid path 250 and the 23th linear flow field LF23 formed in the second fluid path 260 are described in detail below.

However, the fluid flow of the first block 220, the second block 230, and the third block 240 of the fuel cell separator 200 according to the second embodiment of the present invention is the same as the fluid flow of the first block 20, the second block 30, and the third block 40 of the fuel cell separator 100 of FIG. 1 shown in FIG. 23, and thus repeated descriptions are omitted.

In addition, the fluid and H₂O flow path of the fuel cell including the fuel cell separator 200 according to the second embodiment of the present invention are the same as the fluid and H₂O flow path of the fuel cell including the fuel cell separator 100 of FIG. 1 shown in FIG. 25, and thus repeated descriptions are omitted.

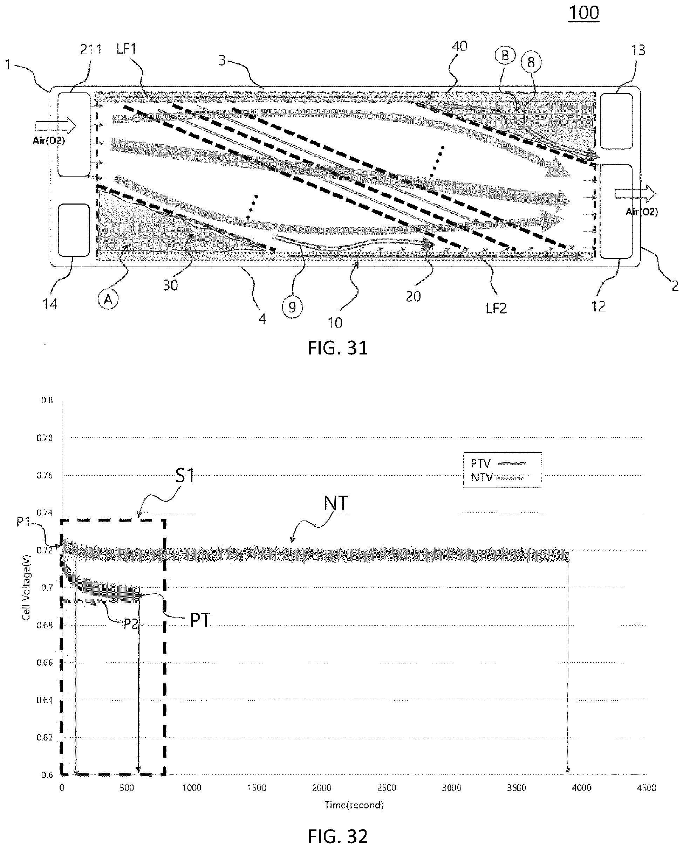

FIG. 30 is a schematic diagram illustrating a complex flow field formed in a fuel cell separator including a pair of fluid paths of FIG. 28, and FIG. 31 is a schematic diagram illustrating the flow paths of fluid and H₂O in the fuel cell separator of FIG. 28 in the fuel cell of FIG. 25.

According to an embodiment, a 21th flow field (first flow field21) formed in the first block 220 may include a 21th linear diagonal flow field LF21, a 21th curved diagonal flow field CF21, and a 22th curved diagonal flow field CF22.

Here, the formation mechanism of the 21th linear diagonal flow field LF21, the 21th curved diagonal flow field CF21, and the 22th curved diagonal flow field CF22 according to an embodiment and the formation mechanism of the first linear diagonal flow field LF1, the first curved diagonal flow field CF1, and the second curved diagonal flow field CF2 of FIG. 24 are the same, and thus repeated descriptions are omitted.

A 22th flow field (second flow field22) formed in the second block 230 according to an embodiment may include a plurality of first turbulent stagnant flow fields TSF21, a plurality of second turbulent stagnant flow fields TSF22, and a plurality of third turbulent stagnant flow fields TSF23.

Here, a 23th flow field (third flow field23) formed in the third block 240 is formed by the same mechanism as the 22th flow field (second flow field22) formed in the second block 230, and thus repeated descriptions are omitted.

Referring back to FIG. 28, as the fluid flow velocity (flow rate) decreases away from the gas inlet 11, the flow velocity (flow rate) of a 22th curved diagonal flow field CF22 decreases from the gas inlet 11 toward the gas outlet 12 due to energy loss caused by turbulence and friction occurring on the first side of the first block 220.

In addition, as the 22th curved diagonal flow field CF22 flows from the gas inlet 11 to the gas outlet 12, the amount of oxygen (O₂) transported by the 22th curved diagonal flow field CF22 decreases.

In addition, as shown in FIG. 31, as power generation progresses, H₂O may accumulate excessively in region ⓑ of the third block 240, causing the H₂O flooding phenomenon.

According to an embodiment, the flow velocity (flow rate) of the 22th curved diagonal flow field CF22 is reduced by the 22th linear flow field LF22 formed in the first fluid path 250, and the amount of oxygen (O₂) is reduced, so that the H₂O flooding phenomenon of the third block 240 may be prevented.

Specifically, the first fluid path 250 is installed in a straight line along the side of the first block 220 and the third block 240 between the first side 1 and the second side 2, and the 22th linear flow field LF22 is formed by the fluid flowing into the first fluid path 250 from the gas inlet 11.

Here, in the 22th linear flow field LF22, fluid flows along a straight flow path with no frictional resistance, so the flow velocity (flow rate) of the 22the linear flow field LF22 is faster than the flow velocity (flow rate) of the 22the curved diagonal flow field CF22 formed by passing through a plurality of block lines including a plurality of block members and mixing zones of the first block 220, and thus the flow rate also increases.

Accordingly, as shown in FIG. 30, in the 22th linear flow field LF22 flowing in the direction from the first side 1 to the second side 2, fluid and oxygen (O₂) contained in the fluid are supplied to the 22th curved diagonal flow field CF22, and by supplying the fluid and oxygen (O₂), a decrease in the flow velocity (flow rate) of the 22th curved diagonal flow field CF22 may be prevented and a decrease in the amount of oxygen (O₂) may be prevented.

In addition, since some of H₂O accumulated in region ⓑ is discharged to the gas outlet 12 by fluid supplied from the 22th linear flow field LF22 to the third block 240 (⑧), the H₂O flooding phenomenon in the third block 240 may be prevented.

Referring back to FIG. 28, as the fluid flow velocity (flow rate) decreases away from the gas inlet 11, the flow velocity (flow rate) of the 21th curved diagonal flow field CF21 decreases as moving from the gas inlet 11 toward the gas outlet 12 due to energy loss caused by turbulence and friction on the second side of the first block 220.

In addition, the membrane-electrode assembly 300a through which the 21th curved diagonal flow field CF21 passes may experience a drying phenomenon due to dry air supplied through the inlet 11 and heat generated by power generation.

In addition, as shown in FIG. 31, as power generation progresses, H₂O may accumulate excessively in region ⓐ of the second block 230, causing the H₂O flooding phenomenon.

According to an embodiment, by the 23th linear flow field LF23 formed in the second fluid path 260, the flow velocity (flow rate) of the 21th curved diagonal flow field CF21 may be prevented from decreasing, and the drying phenomenon of the membrane-electrode assembly 300a and the H₂O flooding phenomenon of the second block 230 may be prevented.

Specifically, the second fluid path 260 is installed in a straight line along the side of the first block 220 and the second block 230 between the first side 1 and the second side 2, and the 23th linear flow field LF23 is formed by fluid flowing into the second fluid path 260 from the second block 230.

Here, in the 23th linear flow field LF23, fluid flows along a straight flow path with no frictional resistance, so the flow velocity (flow rate) of the 23th linear flow field LF23 is faster than the flow velocity (flow rate) of the 21th curved diagonal flow field CF21 formed by passing through a plurality of block lines including a plurality of block members and mixing zones of the first block 220, and thus the flow rate also increases.

Accordingly, as shown in FIG. 30, fluid may be supplied from the 23th linear flow field LF23 flowing in the direction from the first side 1 to the second side 2 to the 21th curved diagonal flow field CF21. By supplying this fluid, a decrease in the flow velocity (flow rate) of the 21th curved diagonal flow field CF21 may be prevented.

In addition, as shown in FIG. 31, some of H₂O accumulated in the second block 230 is discharged from the second block 230 by the 23th linear flow field LF23 and supplied to the membrane-electrode assembly 300a through which the 21th curved diagonal flow field CF21 passes, thereby preventing the membrane-electrode assembly 300a from drying out.

In addition, as shown in FIG. 31, some of the H₂O accumulated in the second block 230 may be discharged from the second block 230 to the gas outlet 12 by the 23th linear flow field LF23 (⑨), thereby preventing the H₂O flooding phenomenon of the second block 230.

FIG. 32 is a graph image comparing the cell voltage (V) behavior over time of a novel fuel cell having a fuel cell separator applied according to the second embodiment of the present invention and a conventional fuel cell having a conventional fuel cell separator, and FIG. 33 is an enlarged graph image of the S1 portion of FIG. 32.

The cell voltage (V) behaviors over time (seconds) of a novel fuel cell including the fuel cell separator applied according to the second embodiment of the present invention and a conventional fuel cell including a conventional fuel cell separator were measured in an unhumidified condition without using a humidifier for the novel fuel cell and the conventional fuel cell.

In addition, a conventional fuel cell separator having a plurality of linear flow paths formed between an inlet and outlet, which fluidly connect the inlet and the outlet, was applied to the conventional fuel cell.

In addition, it was analyzed that the voltage behavior of the fuel cell to which the fuel cell separator according to the second embodiment of the present invention was applied and the voltage behavior of the fuel cell to which the fuel cell separator according to the first embodiment of the present invention was applied were almost similar. Accordingly, a detailed description of the voltage behavior of the fuel cell to which the fuel cell separator according to the first embodiment of the present invention is applied is omitted.

Referring to FIG. 32, the cell voltage (NTV) of the novel fuel cell to which the fuel cell separator according to the second embodiment of the present invention is applied showed a voltage of about 0.725 V at the time of cell operation, and stabilized at a voltage of about 0.718 V to 0.719 V after about 60 seconds (P1) after the start of operation.

In addition, voltage measurement of the novel fuel cell according to the second embodiment of the present invention showed a stable voltage behavior between about 0.718 V and 0.719 V for about 10 minutes or more (about 3900 seconds).

However, referring to FIGS. 32 and 33, the cell voltage (PTV) of the conventional fuel cell to which the conventional fuel cell separator is applied began to decrease rapidly below 0.7 V (P2) after the start of operation and decreased to below approximately 0.69 V approximately 60 seconds after the start of operation. Then, the cell stopped operating.

As examined above, it can be seen that, according to the conventional fuel cell separator applied to the conventional fuel cell, in a non-humidified state where no humidifying device is applied, the operation of the fuel cell is impossible due to a rapid decrease in the fuel cell voltage (V).

However, according to the fuel cell separator according to the second embodiment of the present invention applied to the novel fuel cell, it can be seen that the cell voltage of the fuel cell is stably maintained even in a non-humidified state where no humidifying device is applied, so that the fuel cell can be operated stably.

In the case of conventional fuel cell systems, the volume and weight thereof increased due to a humidifying device and auxiliary devices for the operation of the humidifying device, which limits devices and technical fields to which fuel cell systems may be applied.

Accordingly, according to the fuel cell system (not shown) including the fuel cell separators 100 and 200 according to an embodiment, since a humidifying device and auxiliary devices for the operation thereof are not required, the volume and weight of the fuel cell system may be significantly reduced, so devices and technical fields to which the fuel cell system may be applied may be expanded.

In addition, according to the fuel cell system (not shown) including the fuel cell separators 100 and 200 according to an embodiment, by eliminating a humidifier and auxiliary devices for the operation thereof, the price of the fuel cell system may be reduced, thereby increasing the price competitiveness thereof in the related technology field.

Although the present invention has been described with reference to embodiments thereof, a person skilled in the art will appreciate that the present invention may be implemented in other specific forms without changing its technical ideas or essential features. Therefore, it should be understood that the embodiments described above are exemplary in all respects and not limiting.

## Claims

1. A fuel cell separator, comprising:
a body comprising a gas inlet formed along a first side and a gas outlet formed along a second side located diagonally from the gas inlet and facing the first side;
the first block installed in the diagonal direction to fluidly connect the gas inlet and the gas outlet;
a second block installed adjacent to a first corner area of the first side, located opposite the gas inlet, so as to be fluidly connected to the first block; and
a third block installed adjacent to a second corner area of the second side, located opposite the gas outlet, so as to be fluidly connected to the first block.

2. The fuel cell separator according to claim 1, wherein the first block comprises a plurality of first block lines arranged to form a first angle with a first center line that passes through a center point of the body so as to be perpendicular to the first side of the body and arranged at an 11th gap and a plurality of first flow paths formed between the first block lines.

3. The fuel cell separator according to claim 2, wherein each of the first block lines comprises a plurality of first block members arranged at a 12th gap and a plurality of first mixing zones formed by the 12th gap and fluidly connecting the first flow paths.

4. The fuel cell separator according to claim 2, wherein the first block lines comprise a first boundary block line facing an end of the gas inlet and forming a boundary with the second block and a second boundary block line facing an end of the gas outlet and forming a boundary with the third block.

5. The fuel cell separator according to claim 4, wherein the first boundary block line comprises a plurality of 1a-th block members arranged at a 11a-th gap and a plurality of 1a-th mixing zones formed by the 11a-th gap and configured to be fluidly connected to the first flow paths, and
the second boundary block line comprises a plurality of 1b-th block members arranged at a 11b-th gap and a plurality of 1b-th mixing zones formed by the 11b-th gap and configured to be fluidly connected to the first flow paths .

6. The fuel cell separator according to claim 4, wherein the first boundary block line forms a second angle with the first center line, and the second boundary block line forms a third angle with the first center line.

7. The fuel cell separator according to claim 6, wherein, in a total block area, which is a sum of areas of the first block, the second block, and the third block, an area ratio of each of the first block, the second block, and the third block varies depending on changes in one or more of the second angle, the third angle, a length of the gas inlet, and a length of the gas outlet.

8. The fuel cell separator according to claim 1, wherein the second block comprises a plurality of second block lines forming a fourth angle with a first center line that passes through a center point of the body so as to be perpendicular to a first side of the body and arranged at a 22nd gap and a plurality of second flow paths formed between the second block lines.

9. The fuel cell separator according to claim 8, wherein each of the second block lines comprises a plurality of second block members arranged at a 21th gap and a plurality of second mixing zones formed by the 21th gap and fluidly connecting the second flow paths.

10. The fuel cell separator according to claim 1, wherein the third block comprises a plurality of third block lines forming a fifth angle with a first center line that passes through a center point of the body so as to be perpendicular to a first side of the body and arranged at a 31nd gap and a plurality of third flow paths formed between the third block lines.

11. The fuel cell separator according to claim 10, wherein each of the third block lines comprises a plurality of third block members arranged at a 31th gap and a plurality of third mixing zones formed by the 31th gap and fluidly connecting the third flow paths.

12. The fuel cell separator according to claim 1, further comprising a pair of fluid paths installed parallel to the first center line that passes through a center point of the body so as to be perpendicular to the first side of the body and installed spaced apart from each other with the first block, the second block, and the third block therebetween.

13. The fuel cell separator according to claim 12, wherein the pair of fluid paths comprise a first fluid path installed to face one end of the gas inlet and installed between the first side and the second side so as to be fluidly connected to the first block and the third block, and
a second fluid path installed to face one end of the gas outlet and installed between the first side and the second side so as to be fluidly connected to the first block and the second block.
